(19) **Europäisches Patentamt**

**European Patent Office**

**Office européen des brevets**

(11) **EP 0 613 234 B1**

(12) **EUROPEAN PATENT SPECIFICATION**

(45) Date of publication and mention
of the grant of the patent:
**28.11.2001   Bulletin 2001/48**

(51) Int Cl.⁷: **H02M 5/458**, H02M 1/00,
H02M 1/10, H02K 29/06,
H02K 1/14

(21) Application number: **94301168.4**

(22) Date of filing: **18.02.1994**

(54) **Single phase electronically commutated motor system and method**

Elektronisch kommutiertes Einphasenmotorsystem und Verfahren

Système de moteur à commutation électronique monophasé et méthode

(84) Designated Contracting States:
**DE ES FR GB IT**

(30) Priority: **22.02.1993   US 23790**

(43) Date of publication of application:
**31.08.1994   Bulletin 1994/35**

(73) Proprietor: **GENERAL ELECTRIC COMPANY**
**Schenectady, NY 12345 (US)**

(72) Inventors:
 • **Erdman, David Marvin**
  **Fort Wayne, Indiana 46825 (US)**
 • **Hollenbeck, Robert Keith**
  **Fort Wayne, Indiana 46804 (US)**
 • **Day, James, (NMN)**
  **Scotia, New York 12302 (US)**
 • **Kliman, Gerald Burt**
  **Schenectady, New York 12309 (US)**
 • **MacMinn, Stephen Richard**
  **Schenectady, New York 12309 (US)**
 • **Stephens, Charles Michael**
  **Pattersonville, New York 12137 (US)**
 • **Turnbull, Fred Gerdes**
  **Scotia, New York 12302 (US)**

(74) Representative: **Goode, Ian Roy et al**
**London Patent Operation**
**General Electric International, Inc.**
**Essex House**
**12-13 Essex Street**
**London WC2R 3AA (GB)**

(56) References cited:
  EP-A- 0 486 130      DE-A- 3 314 300
  US-A- 4 533 986      US-A- 4 651 079
  US-A- 4 737 674      US-A- 4 835 448
  US-A- 4 935 861      US-A- 5 057 733

 • IEE PROCEEDINGS-B, vol.138, no.6, November
  1991 pages 338 - 344, XP267844 R. ITOH ET AL.
  'Single-phase sinusoidal rectifier with
  step-up/down characteristics'
 • PATENT ABSTRACTS OF JAPAN vol. 13, no. 277
  (E-778) 26 June 1989 & JP-A-01 064 583 (TOYOTA
  MOTOR CORP) 10 March 1989
 • PATENT ABSTRACTS OF JAPAN vol. 14, no. 36
  (E-877) 23 January 1990 & JP-A-01 268 482
  (RICOH CO LTD) 26 October 1989

**Description**

An electronically commutated motor (ECM) is a motor having permanent magnets mounted on the rotor. The stator of the motor contains wire-wound coils, which when energized with current, interact with the permanent magnet rotor to produce positive or negative torque, depending on the direction of the current with respect to the polarity of the magnets. The polarity of the magnets with respect to the stator coil alternate when the rotor moves unidirectionally, so to maintain a constant direction of torque, it is necessary to alternate the direction of the stator current in synchronism. The energization of the stator is controlled by a transistor inverter having the sophistication to ultimately control the direction of torque, the amount of torque, and the shaft speed.

The stator coils are organized into groupings called phases, each phase being excited with similar, but phase-shifted, alternating currents. Three-phase stators are the most common. Single-phase stators obtain cost-savings by component reduction in the inverter but a single-phase machine can be more difficult to start from rest.

The conventional ac to dc input for an ECM inverter is a diode rectifier. This circuit has three major disadvantages: lack of control of the dc voltage down to zero, input harmonic currents, and low ac power factor. Several approaches using a pulse width modulated (PWM) ac to dc converter provide low input harmonic currents and unity power factor. However, they step-up the input ac voltage from its diode rectified value.

An approach to gating circuitry in the prior art would be the use of small isolation transformers. When gating action is desired, an alternating voltage, typically a square wave of logic-supply voltage levels, is applied to the primary of the small transformer, and the output of the transformer secondary is then rectified and supplied to the power switch gate. The voltage level shifting is maintained by the dielec tric between the transformer primary and secondary windings.

High voltage IC's perform gating action for bridge inverters (such as the International Rectifier IR2110), but they require that the lower of the two gating voltages be only one threshold voltage above ground. In this ECM drive circuit, one of the gating voltages is significantly below ground.

DE-A-3314300 discloses a converter comprising a direct current bus, means for dividing the voltage provided by the direct current bus, two switches connected in series across the direct current bus and winding having one end connected between the switches and having the other end connected to the dividing means.

It is an object of this invention to provide a low cost electronically commutated motor. It is another object of this invention to provide an electronically commutated motor having a single phase and a single winding which can be started from rest without the need for a start winding. It is another object of this invention to provide a single phase, single winding electronically commutated motor having variable speed control and/or variable torque control. It is still another object of this invention to provide an electronically commutated motor driven by a dc bus voltage which is controllable so that harmonic currents are minimized and a high ac power factor is provided. It is still another object of this invention to provide an electronically commutated motor which avoids the need for using isolation transformers. It is another object of this invention to provide an electronically commutated motor having peak current control. It is another object of this invention to provide a single phase, single winding electronically commutated motor which only requires two power switches.

Any one of these objects may be achieved by the present invention having the features of claim 1 or claim 7.

In the accompanying drawings:-

Fig. 1 is a prior art circuit using four power switches to control a single phase, single winding motor.

Fig. 2A is a schematic diagram of a single phase, single winding electronically commutated motor (ECM) of the invention with only two power switches and a capacitive voltage divider.

Fig. 2B is a schematic diagram showing the circuit of Fig. 2A powering several windings of a motor in parallel, each winding controlled with only two power switches.

Fig. 3A is a schematic diagram of a single phase, single winding motor with a voltage doubler input in the power supply and having only two power switches and two capacitors having the winding stage connected therebetween.

Fig. 3B is a schematic diagram showing the circuit of Fig. 3A powering several windings of a motor in parallel, each winding controlled with only two power switches.

Fig. 4 illustrates a partial, elevational plan view of a notched stator for preferentially parking the rotor of a motor such as the single phase ECM of the invention.

Figs. 5A-5B are graphs which illustrate the electronic characteristic during steady-state performance for a single phase, single winding motor with a notched stator.

Figs. 6A-6C together illustrate portions of a schematic diagram of a circuit for powering and controlling a single phase, single winding motor.

Fig. 7 is a block diagram of a Cuk DC/DC converter circuit as a controlled voltage, unity displacement factor input in combination with a single phase ECM.

Fig. 8 is a partial schematic diagram of the circuit of Fig. 7.

Figs. 9-11 are schematic diagrams illustrating one preferred embodiment of the power switch gating circuitry for a single phase ECM.

Figs. 12A-D are graphs which illustrate waveforms for startup performance for the circuit of Fig. 2A without bus regulation.

Figs. 13A-D are graphs which illustrate waveforms for startup performance for the circuit of Fig. 3A without bus regulation.

Figs. 14A-14D illustrate waveforms for constant speed performance of a single phase ECM of Fig. 3A.

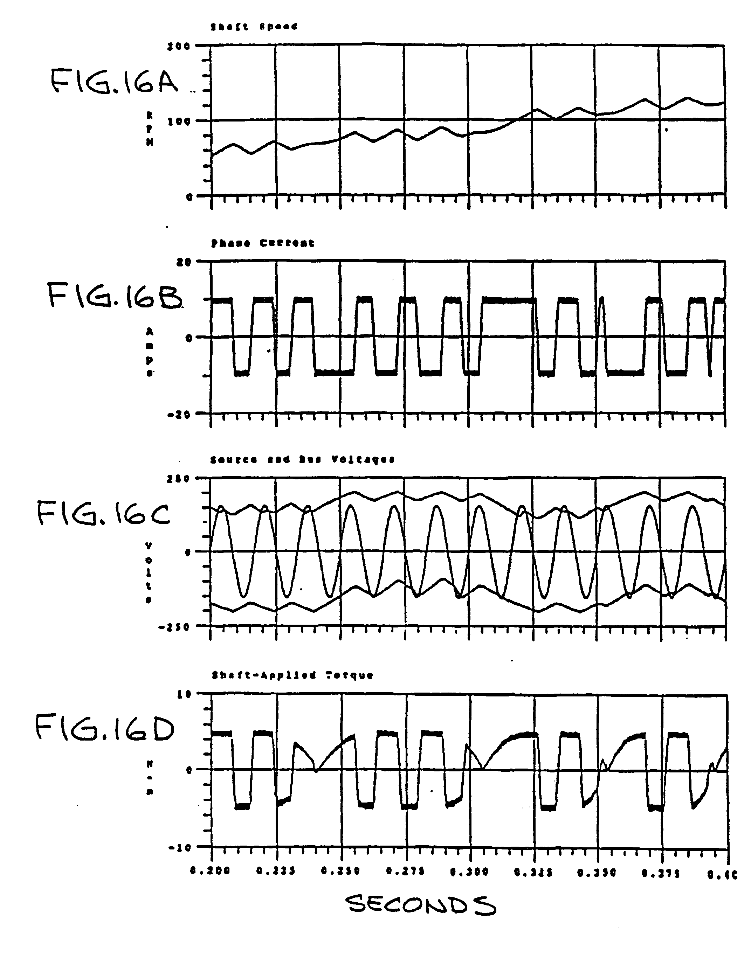

Figs. 15A-D and 16A-D illustrate waveforms for starting performance of the single phase ECM of Figure 3A with bus regulation.

Fig. 17 illustrates the effect on RPMs over time due to bus regulation of the starting acceleration of the single phase ECM of Fig. 3A.

Fig. 18 illustrates an elevational plan view of a stator tooth with the stator tip removed for receiving a bobbin wound winding of a motor such as the single phase ECM.

Fig. 19 illustrates a perspective view of a portion of a stator having separate interlocking stator tips of a motor such as the single phase ECM.

Fig. 20 shows a stator having removable stator tips in the form the of a one-piece molded or co-extruded annular ring of a motor such as the single phase ECM.

Fig. 21A-21B illustrate elevational plan views of coils in a motor, such as a single phase ECM, wound by alternative methods to improve the packing efficiency of a motor such as the single phase ECM.

Corresponding reference characters indicate corresponding parts through the drawings.

Detailed Description of Preferred Embodiments

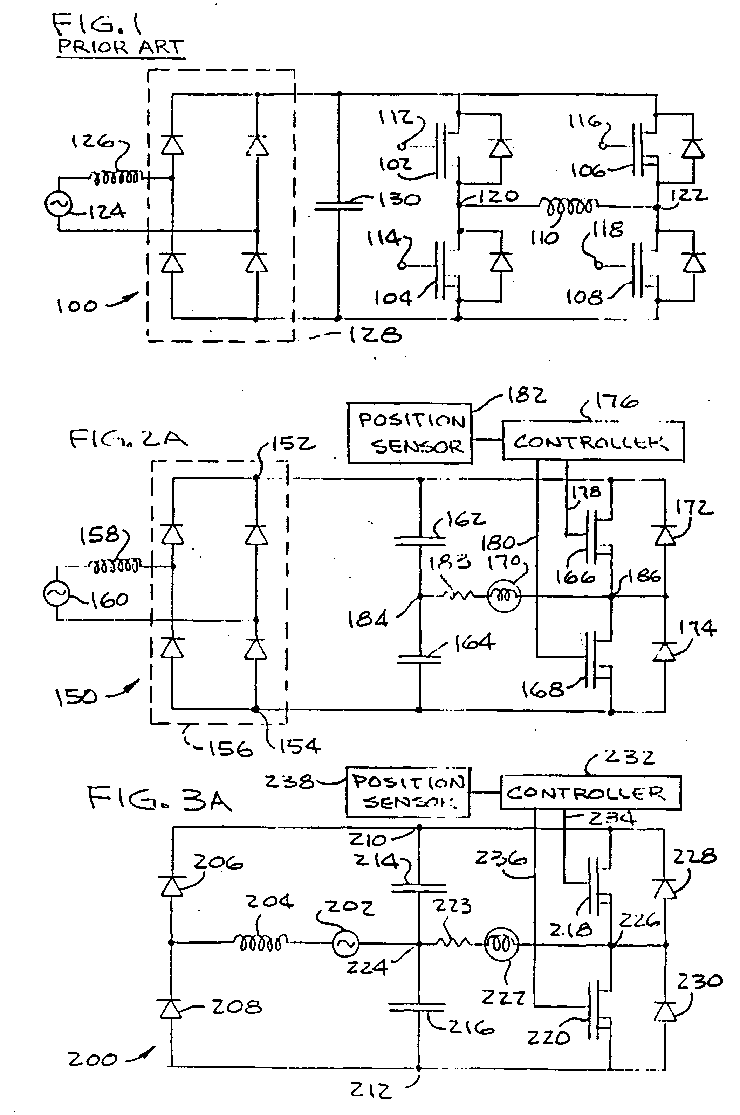

Referring now to Fig. 1, a prior art circuit 100 for energizing a single phase, single winding motor is shown. Circuit 100 includes four power switches 102, 104, 106 and 108 for controlling the flow of electrical current through a single winding 110 on the stator of the motor (not shown). Power switches 102, 104, 106 and 108 are controlled by conventional timing circuitry via terminals 112, 114, 116 and 118, respectively. When power switches 102 and 108 are turned on, power switches 104 and 106 are turned off so that current flows through winding 110 from a terminal 120 to a terminal 122. When power switches 104 and 106 are turned on, power switches 102 and 108 are turned off so that current flows through winding 110 from terminal 122 to terminal 120 in the opposite direction as before. Power is provided to the power switches via an external ac power source 124, an optional filtering inductor 126, a rectifier bridge 128, and a filter capacitor 130. Although circuit 100 effectively powers and controls a single phase, single winding motor, it requires four power switches and related control circuitry which increases the cost.

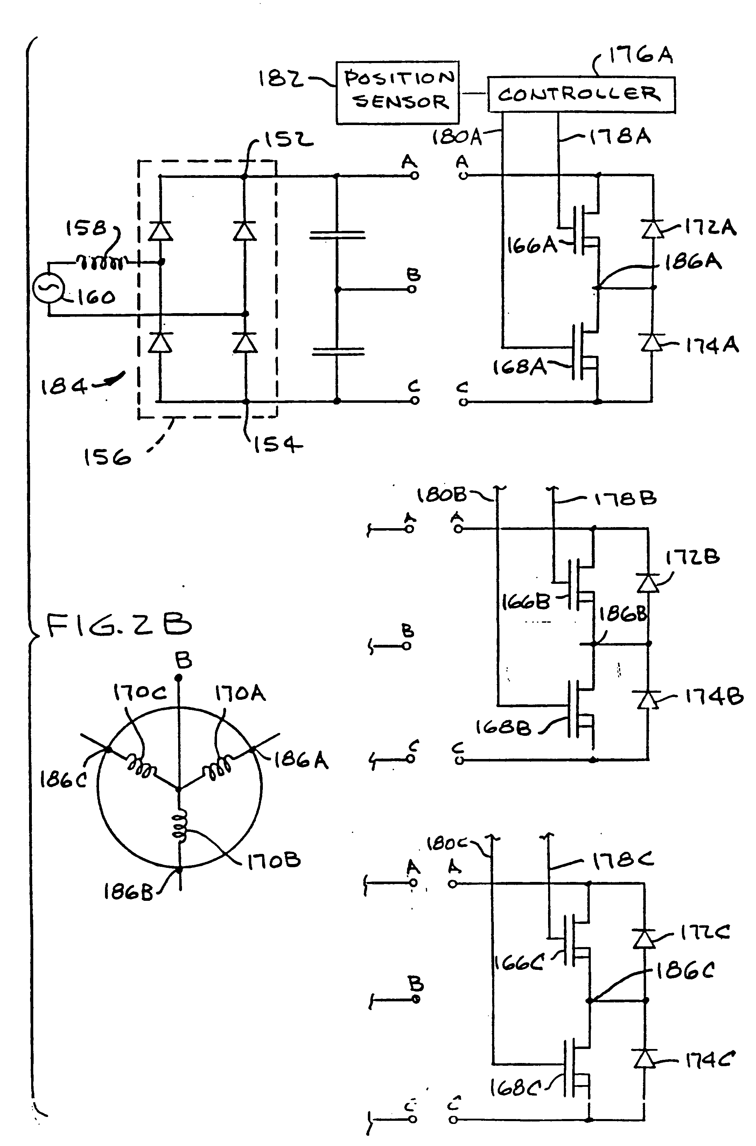

Fig. 2A shows one preferred embodiment of a circuit 150 of the present invention for controlling a single phase, single winding motor. Preferably, such a motor may be used, for example, to drive a fan used to induce a draft in a combustion chamber such as a gas furnace for an HVAC system. Circuit 150 includes a dc bus defined by terminals 152 and 154. The dc bus 152, 154 includes a conventional rectifier bridge 156 and a filtering inductor 158. The dc bus 152, 154 thereby converts ac electrical power from an ac power source 160 into a dc current used for energizing the remaining elements of circuit 150.

A pair of capacitors 162 and 164 are connected in series across dc bus 152, 154. A pair of power switches 166 and 168 are also connected in series across dc bus 152, 154. Flyback diodes 172 and 174 are connected respectively across power switches 166 and 168. A single winding 170 of the single phase, single winding motor is connected at one end via a precision resistor 183 to a terminal 184 between the capacitors 162 and 164 and is connected at the other end to a terminal 186 between the power switches 166 and 168. Power switches 166 and 168 are controlled by a controller 176 via a line 178 and 180, respectively. Controller 176 is connected to a position sensor 182 which senses the angular position of the permanent magnet rotor of the motor. Position sensor 182 may be any conventional device, such as a Hall effect device. Precision resistor 183 is optional so that current may be monitored by controller 176 via a line (not shown) to regulate the motor phase current.

In operation, capacitors 162 and 164 divide the voltage appearing across dc bus 152, 154. Capacitors 162 and 164 are preferably equal in size so that the voltage from dc bus 152 and 154 divides roughly equally between them. The size of the capacitors is a function of the input power of the motor and the quality of the capacitors which determines the ripple current rating. When controller 176 closes power switch 168, power switch 166 is open. The closure of power switch 168 connects the positive voltage from capacitor 164 across winding 170 causing a positive current to flow through the winding from terminal 184 to terminal 186. In addition, positive current is also provided through winding 170 from dc bus 152, 154 via terminal 152, capacitor 162, terminal 184, winding 170, terminal 186, power switch 168, and terminal 154. When controller 176 closes power switch 166, power switch 168 is open. The closure of power switch 166 connects the positive voltage from capacitor 162 across winding 170 causing a positive current to flow through the winding from terminal 186 to terminal 184. In addition, positive current is also provided through winding 170 from dc bus 152, 154 via terminal 152, power switch 166, terminal 186, winding 170, terminal 184, capacitor 164, and terminal 154. Accordingly, control of power switches 166 and 168 controls the direction of current flow through winding 170 and, therefore, controls the direction of the magnetic field generated by the stator. Because controller 176 knows the rotor position via position sensor 182, controller 176 controls the magnetic field in the stator to cause the rotor to rotate. More particularly, controller 176 selectively applies to the first and second ends of winding 170 the first dc voltage to cause the rotor to rotate in a preset direction and also selectively applies to the first and second ends of the winding the second dc voltage to cause the rotor to rotate in the same preset direction.

Fig. 2B shows bus bar 152, 154 and the voltage divider provided by capacitors 162 and 164 of Fig. 2A connected to multiple parallel winding circuits. Each winding circuit contains a single winding 170A-C, respectively. Power is provided to the windings 170A-C via bus bar 152, 154, capacitors 162 and 164, and power switches 166A-C and 168A-C. A controller 176 controls the power switches via lines 178A-C and 180A-C, respectively. By controlling the power switches, controller 176 controls the flow of current through windings 170A-C and, therefore, controls the magnetic field induced in the stator of the motor. Controller 176 is also connected to position sensor 182 for sensing the position of the rotor. As described above for Fig. 2A, controller 176 controls the magnetic field in the stator in view of the known position of the rotor to cause the rotor to rotate.

Fig. 3A shows one preferred embodiment of a circuit 200 of the present invention for controlling a single phase, single winding motor. The power input arrangement for circuit 200 employs a voltage doubler input. Circuit 200 includes a dc bus defined by terminals 210 and 212. The dc bus 210, 212 receives its power via an ac power source 202, a filtering inductor 204, and a pair of rectifiers 206 and 208. A pair of capacitors 214 and 216 are connected in series across dc bus 210, 212. A pair of power switches 218 and 220 are also connected in series across dc bus 210, 212. Flyback diodes 228 and 230 are connected respectively across power switches 218 and 220. A single winding 222 of the single phase, single winding motor is connected at one end via a precision resistor 223 to a center tapped terminal 224 between the capacitors 214 and 216 and is connected at the other end to a terminal 226 between the power switches 218 and 220 of the power switch and flyback diode totem-pole. The ac power source 202 is also connected at one end to terminal 224. Power switches 218 and 220 are controlled by a controller 232 via lines 234 and 236, respectively. Controller 232 is also connected to a position sensor 238 which senses the angular position of the rotor of the motor. Position sensor 238 may be any conventional device, such as a Hall effect device, a sense winding or a mechanical position sensor. The precision resistor 223 is optional so that current may be monitored by controller 232 via a line (not shown) to regulate the motor phase current.

The power input arrangement of Fig. 3A is called a "voltage doubler" input because the rail-to-rail bus voltage will be twice the peak AC line voltage. When the AC line voltage is greater than the voltage of the upper rail, current will flow from the line through the upper input diode and upper bus capacitor, charging the upper bus capacitor. Likewise, when the AC line voltage is more negative than the voltage of the lower rail, current will flow from the AC line through the lower input diode and lower bus capacitor, charging the lower bus capacitor.

When controller 232 closes power switch 220, power switch 218 is left open. The closure of power switch 220 connects the positive voltage from capacitor 216 across winding 222 causing a positive current to flow through winding 222 from terminal 224 to terminal 226. In addition, positive current is also provided through winding 222 from dc bus 210, 212 via terminal 210, capacitor 214, terminal 224, winding 222, terminal 226, power switch 220, and terminal 212. When controller 232 closes power switch 218, power switch 220 is left open. The closure of power switch 218 connects the positive voltage from capacitor 214 across winding 222 causing a positive current to flow through winding 222 from terminal 226 to terminal 224. In addition, positive current is also provided through winding 222 from dc bus 210, 212 via terminal 210, power switch 218, terminal 226, winding 222, terminal 224, capacitor 216, and terminal 212. Accordingly, control of power switches 218 and 220 controls the direction of current flow through motor winding (MW1) 222 and, therefore, controls the direction of the magnetic field generated by the stator. Because controller 232 knows the rotor position via position sensor 238, controller 232 controls the magnetic field in the stator to cause the rotor to rotate. More particularly, controller 232 selectively applies to the first and second ends of winding 222 the first dc voltage to cause the rotor to rotate in a preset direction and also selectively applies to the first and second ends of the winding the second dc voltage to cause the rotor to rotate in the same preset direction.

In general, current regulation may be required, such as that implemented by a hysteresis-band or a peak regulator. In hysteresis-band regulation, when the current reaches a maximum positive or a maximum negative value (the upper level of the hysteresis-band), gating is removed from the presently conducting power switch, forcing the current to flow through the flyback diode in the opposite end of the totem pole. This action effectively places an opposite voltage across the winding, and the current then discharges. Also, during the current discharge action, the current flows through the opposite capacitor, and in such a direction as to recharge this opposite capacitor. When the motor current is sufficiently discharged (to the lower level of the hysteresis-band) the appropriate power switch is regated, and the motor current recharges. This current regulation action maintains a roughly constant value of current in the motor, especially if the difference between the upper and lower levels of the hysteresis band is small. In peak regulation, current is turned off when a preset peak is reached and turned on a predetermined time thereafter.

Regulation of the motor phase current preferably requires measurement of the current by some means. One economical current measurement is by measurement of the voltage across a precision resistor, as noted above, placed in series with the motor phase. The most practicable placement of the precision resistor is at the lower end of the motor phase leg, with one end of the precision resistor attached to the center-tap 224 of the bus, as shown in Fig. 3A. It then becomes convenient to reference the bus center-tap as "ground", wiLh all other control circuitry referenced to this ground point as well. The upper rail of the bus, that is, the upper side of the upper bus capacitor, has a large positive voltage, while the negative rail of the bus, that is, the lower end of the lower bus capacitor, has a large negative voltage. The upper power switch must be gated by applying to its gate a voltage that is one threshold voltage above the upper rail, and the lower power switch must be gated by applying to its gate a voltage that is one threshold voltage above the lower rail.

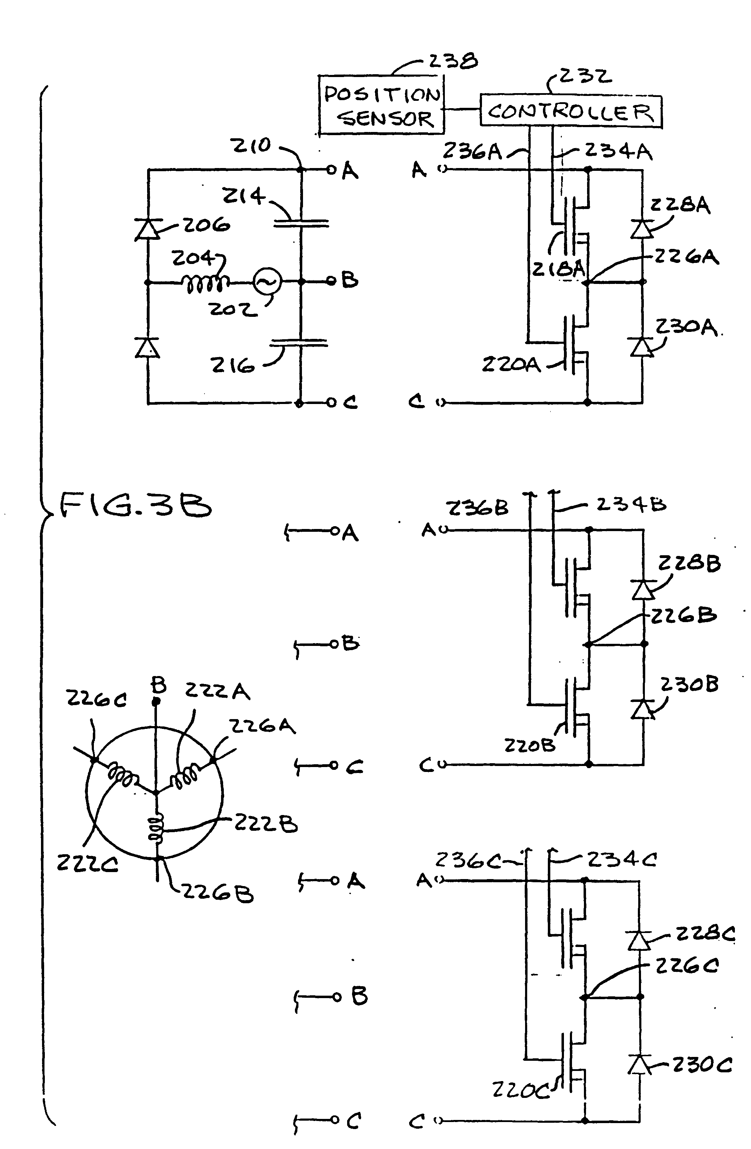

Fig. 3B shows bus bar 210, 212 and capacitors 214 and 216 of Fig. 3A connected to multiple parallel winding circuits. Each winding circuit contains a single winding 222A-C, respectively. Power is provided to the windings 222A-C via bus bar 210, 212, capacitors 214 and 216, and power switches 218A-C and 220A-C. A controller 242 controls the power switches via lines 234A-C and 236A-C, respectively. By controlling the power switches, controller 242 controls the flow of current through windings 222A-C and, therefore, controls the magnetic field induced in the stator of the motor. Controller 242 is also connected to position sensor 238 for sensing the position of the rotor. As described above for Fig. 3A, controller 242 controls the magnetic field in the stator in view of the known position of the rotor to cause the rotor to rotate.

A factor in designing a single phase, single winding motor concerns potential problems during startup. The magnetic saliencies formed by the stator teeth cause a "cogging" or "indenting" torque to force the permanent magnet rotor to rest, or "park", at preferred positions. In a single winding stage motor, the parking positions can coincide with positions of zero electromechanical torque production during startup which makes it difficult to start the motor.

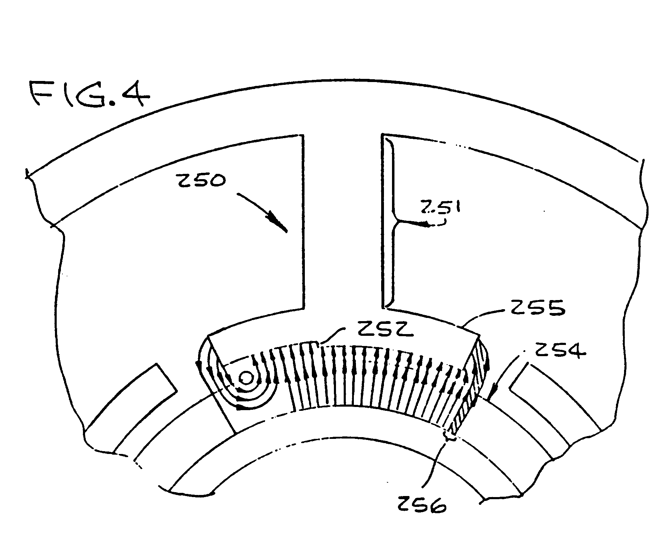

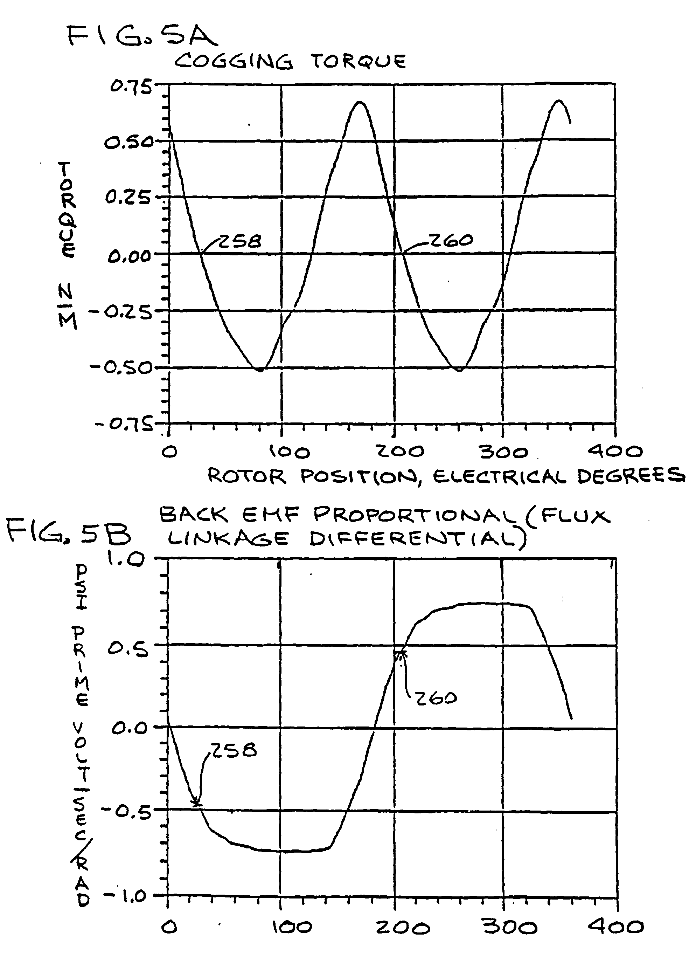

One overcomes the potential startup problem by introducing a magnetic asymmetry into the magnetic design that forces the park positions of the permanent magnet rotor off from the nulls of the electromechanical torque. As those skilled in the art recognize, a stator has a plurality of teeth having faces defining an aperture for receiving a rotor. The faces of the stator teeth and the rotor define an air gap therebetween. In the present invention, an asymmetrical gap or notch is cut into the stator teeth which causes an asymmetry in the air gap reluctivity between the stator and the rotor. This magnetic asymmetry causes the rotor to park in a new position. For example, Fig. 4 shows a stator tooth 250 having an asymmetrical gap or notch 252 for providing an asymmetric air gap reluctivity between a rotor magnet 254 and the stator tooth 250.

The rotor's park positions and startup torque are determined from magnetic field calculations based upon a filamentary magnetic circuit approach. Using this approach, the periphery of the rotor magnet 254 and air gap are divided into a plurality of filaments 256, the filaments being spatial entities having equal peripheral span but different radial length, depending on the location of the filament in the magnetic geometry. For each filament 256, magnetic circuit lengths in the air gap and the rotor magnet 254 are determined. The classical magnetic circuit equation for a permanent magnet is then solved to obtain the flux density and the magnetic energy in each filament. The flux linkage at position $\theta=\alpha$ is calculated by the following summation over all the filaments:

$$\lambda_m(\theta=\alpha) = N_{turns} \; x \sum_0^{filaments} B_g A_g \qquad [1]$$

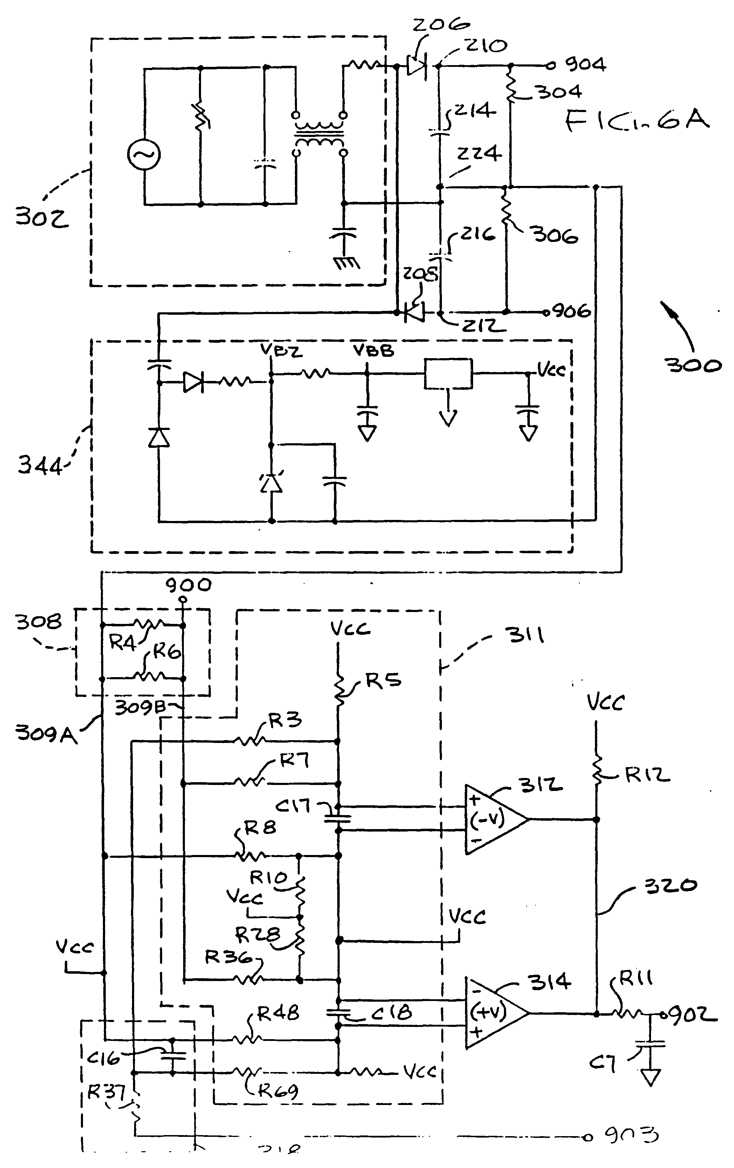

Likewise, the magnetic energy at position $\theta=\alpha$ is calculated by a similar summation over the filaments. Applying equation 1, Fig. 4 in particular shows the boundaries for filaments 256 found between the stator tooth 250 and the rotor magnet 254 in a six-pole machine for a given rotor position. The field calculations are performed at regular increments for the rotor position. Numerical processing produces cyclic waveforms of the flux linkage, magnetic energy, flux linkage differential, and cogging torque. Typical calculations of the flux linkage differential and cogging torque are shown in Figs. 5A and 5B. The parking positions 258 and 260 of the rotor are also shown in Figs. 5A and 5B. The parking positions 258 and 260 shown in Fig. 5A occur where the cogging torque waveform crosses the horizontal axis with negative slope. The parking positions are where the rotor will come to rest without any external electrical or mechanical stimulus. The projection of the parking positions onto the flux differential waveform Fig. 5B indicates the proportional available starting torques 258 and 260, since electromechanical torque is proportional the flux linkage differential multiplied by the winding current. It is seen from the flux linkage differential graphed in Fig. 5B that considerable torque is available during startup from positions 258 and 260 as the rotor begins to rotate.

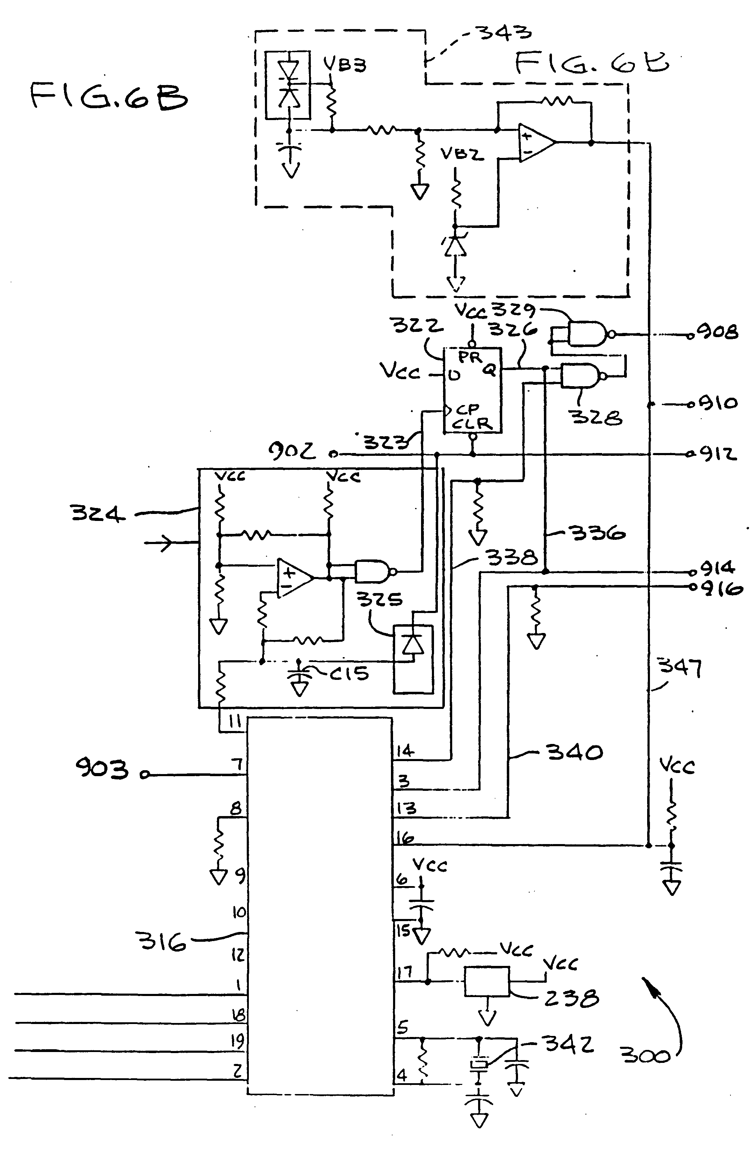

Figs. 6A-6C together comprise a schematic diagram of a circuit 300. Circuit 300 more particularly comprises the electrical components of an electronically commutated motor constructed according to the present invention. Matching terminals with a reference characters 900 to 999 in Figs. 6A-6C show the electrical connections between the com-

**EP 0 613 234 B1**

ponents shown in these figures. In the following disclosure, it will be assumed that all matching 900 series terminals have been connected without further discussion.

As will be noted, a number of the components in Figs. 6A-6C correspond to a number of the components in Fig. 3A. In particular, Fig. 6A shows a circuit within a dashed line 302 which corresponds to the power source 202 and filtering inductor 204 of circuit 200 in Fig. 3A. It will be noted that circuit 300 further includes a pair of rectifiers 206 and 208; a dc bus defined by a terminal 210 and a terminal 212; a pair of capacitors 214 and 216 connected in series across dc bus 210, 212; a pair of power switches 218 and 220 connected in series across the dc bus, 210, 212; a single winding 222 connected at one end to a terminal 224 between capacitors 214 and 216 and connected at the other end to a terminal 226 between power switches 218 and 220; and a pair of flyback diodes 228 and 230 connected respectively across power switches 218 and 220. The structure and operation of each of these circuit elements correspond to the circuit element of like reference numeral in Fig. 3A.

Circuit 300 further includes a pair of optional resistors 304 and 306 connected respectively across capacitors 214 and 216. If capacitors 214 and 216 become excessively charged, optional resistors 304 and 306 safely allow the excess charge to dissipate. This may occur, for example, during startup if a locked rotor condition occurs. Alternatively, an active device such as a switched resistor may be used Lo dissipate excess charge.

Circuit 300 further includes a bi-directional shunt shown within a dashed line 308 in Fig. 6B. Shunt 308 is connected in series with winding 222 between center tapped terminal 224 and terminal 226. Shunt 308 thereby measures the current flow through winding 222. Shunt 308 has multiple resistors for power dissipation. Shunt 308 is connected via a pair of lines 309A and 309B to a pair of comparators 312 and 314. Comparators 312 and 314 are also connected to a current reference level from a microprocessor 316 via pin 7 and the related circuitry within a dashed line 318. By varying the PWM duty cycle at pin 7, the current reference may be varied from 0 to 2.5V (depending on scaling resistors R3, R37, R69). Comparators 312 and 314 output a signal via a line 320 to a D flip flop 322. Flip flop 322 is also connected via a line 323 to a 40 microsecond one shot shown within a dashed line 324. The output of flip flop 322 is transmitted via a line 326 to a NAND gate 328 and via a line 336 to a NAND gate 330. The output of flip flop 322 is also sensed by pin 3 of microprocessor 316 via line 336. Microprocessor 316 controls one shot 324 via pins 11 and 20. One shot 324 includes a diode 325 connected between microprocessor 316 and the output of comparators 312 and 314 whereby microprocessor 316 senses the output of the comparators. An overcurrent condition pulls C15 to zero. Microprocessor 316 is also connected to an input of NAND gates 328 and 330 via lines 338 and 340, respectively.

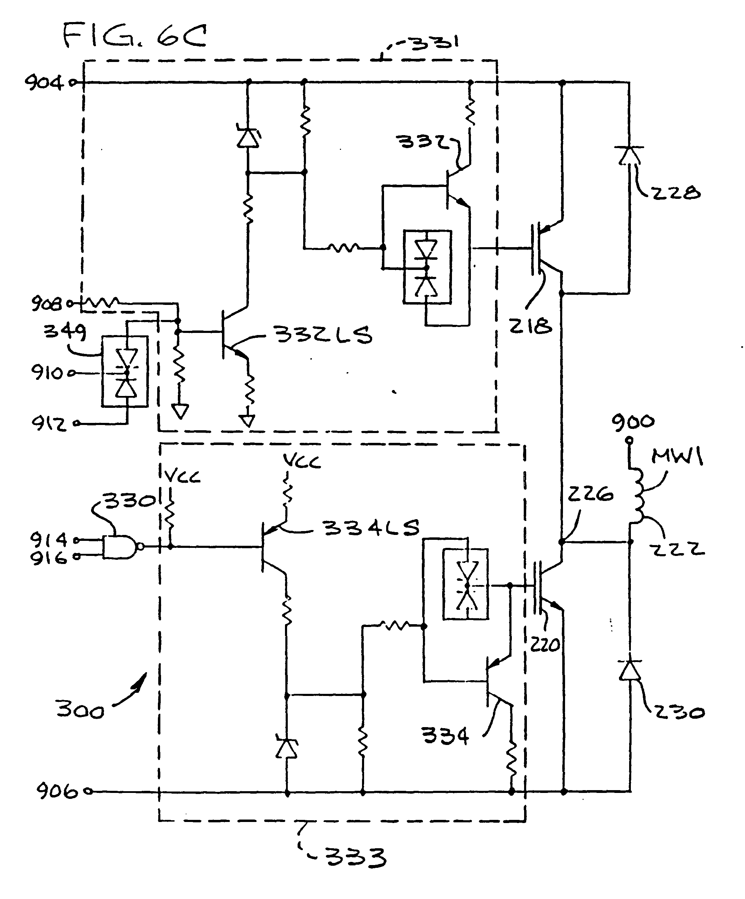

NAND gates 328, 329 and 330 control the driver circuits shown in Fig. 6C within dashed lines 331 and 333, respectively. Driver circuits 331 and 333 turn on and turn off power switches 218 and 220, respectively. Driver circuits 331 and 333 include level shifting circuitry and a clamping circuit for enabling the output of NAND gates 328 and 330 to thereby control the power switches. Driver circuits 331 and 333 further include a transistor 332 and 334, respectively, controlled by level shifting transistors 332LS and 334LS, respectively, for providing better turn off performance from the power switches. It will be noted that power switch 218 is a p-channel transistor and power switch 220 is an n-channel transistor. Accordingly, driver circuits 331 and 333 are the complement of the other. Likewise, the output of NAND gate 328 is inverted via a NAND gate 329 prior to connection with driver circuit 331.

Circuit 300 further includes a Hall effect device 238 connected to microprocessor 316 via a pin 17. Hall effect device 238 is attached to the stator adjacent to the rotor so that microprocessor 316 knows the angular position of the rotor. Circuit 300 further includes a crystal 342 and related resistors and capacitors for setting the operating frequency of microprocessor 316. Circuit 300 also includes a power supply circuit contained within a dashed line 344 of Fig. 6A for providing voltage taps VB2, VB3 and VCC for powering microprocessor 316 and the other components of circuit 300. Circuit 300 also includes a power on reset circuit shown within dashed line 343 in Fig. 6B. Reset circuit 343 resets the motor after power is turned on and maintains a minimum level for a preset period of time. Reset circuit 343 is connected to microprocessor 316 via a line 347 for signalling a reset. Reset circuit 343 is also connected to a clamp 349 in Fig. 6C for turning on power switch 218 to restart the motor when a reset is desired. Finally, microprocessor 316 includes a set of pins 1, 2, 18 and 19 for interfacing the control of the motor driven by winding 222 with other operating conditions of the system in which the motor is used. Pin 2 of microprocessor 316 may provide, for example, a tachometer output indicative of the sensed RPM of the rotor. Pins 1, 18 and 19 may provide, for example, system inputs for setting the proper operating range, torque, or desired revolutions per minute of the motor. One of these pins may receive an input signal representative of the desired speed or torque of the motor in which case microprocessor 316 constitutes means for controlling the speed or torque of the motor in response to an input signal representative thereof. In this case, microprocessor 316 varies the commutation rate of switches 218 and 220 to correspond to the desired speed or torque as indicated by the input signal.

In operation, microprocessor 316 controls the flow of current through winding 222. When microprocessor 316 decides that current should flow through winding 222 in a particular direction for a given period of time, it enables the NAND gate 328 or 330 corresponding to the appropriate power switch 218 or 220 for the given period. The dc current is then commutated and supplied to winding 222 for the given period under the control of the commutation circuitry

6

comprising: microprocessor 316, current reference circuit 318, one shot 324, comparators 312 and 314, and flip flop 322. The dc commutation for circuit 300 allows for the flow of current through winding 222 until the winding current level exceeds the current reference level set by current reference circuit 318. The current is then shut off for a period of 40 microseconds. Current flow then resumes again until the winding current level again exceeds the current reference level set by current reference circuit 318. Another 40 microsecond delay follows and so on until microprocessor 316 signals that the given period for current flow through the winding in the given direction has ended.

More particularly, microprocessor 316 senses the position of the rotor via Hall effect device 238. Microprocessor 316 also sets a current reference level via pin 7 and current reference circuit 318. Microprocessor 316 also controls one shot circuit 324 via pins 11 and 20. Based on the position of the rotor, microprocessor decides whether one of the power switches should be turned on. If, for example, power switch 218 should be turned on, then microprocessor enables NAND gate 328 by sending a logic high level via line 336. Next, the current supplied to winding 222 must be commutated. Accordingly, the signal from shunt 308 on lines 309A and 309B (which corresponds to the current flowing through winding 222) is compared by comparators 312 and 314 to a level set by current reference circuit 318 from R37 and C16 as biased and scaled by resistor network 311. Comparator 312 compares the current flowing in the N channel (switch 220) as indicated by the negative voltage on the shunt whereas comparator 314 compares the current flowing in the P channel (switch 218) as indicated by the positive voltage on the shunt. Optional capacitors C7, C17, and C18 may be used to reduce circuit noise. The values of the resistors and capacitors of network 311 may be as shown in Table I below.

| TABLE I OF COMPONENT VALUES | | | |
|---|---|---|---|
| R3 | 80.6K | 0.1W | 1% |
| R4 | 0.2 | 1/8W | 5% |
| R5 | 127K | 0.1W | 1% |
| R6 | 0.2 | 1/8W | 5% |
| R7 | 4.02K | 0.1W | 1% |
| R8 | 4.02K | 0.1W | 1% |
| R10 | 127K | 0.1W | 1% |
| R11 | 1K | 0.1W | 5% |
| R12 | 27K | 0.1W | 5% |
| R28 | 127K | 0.1W | 1% |
| R36 | 4.02K | 0.1W | 1% |
| R37 | 39.2K | 0.1W | 1% |
| R48 | 4.02K | 0.1W | 1% |
| R69 | 80.6K | 0.1W | 1% |
| R70 | 127K | 0.1W | 1% |
| C7 | 0.001μF | | |
| C15 | 270pF | | |
| C16 | 10μF | 16v | |
| C17 | 270pF | | |
| C18 | 270pF | | |

If either level is low, the comparators send a signal via line 320 and via time constant circuit R11, C7 to set flip flop 322. The high output of flip flop 322 causes NAND gate 328 to have a low output which, via driver circuit 331, turns on power switch 218. Power switch 218 will remain on until either microprocessor 316 turns it off by disabling NAND gate 328 or the current level in winding 222 over time exceeds the level set via current reference circuit 318. When microprocessor 316 turns off power switch 218, it remains off until microprocessor 316 again enables NAND gate 328. When power switch 218 is turned off because the winding current exceeds the reference level, then it remains off while one shot 324 times out 40 microseconds. Flip flop 322 sends a new logic level ONE at the end of the 40 microsecond period and current flow resumes in the given direction. This cycle repeats until microprocessor 316 disables NAND gate 328, thereby signalling that the period of time for current flow through the winding in the given direction has ended. Microprocessor 316 thereby controls the direction of the current flow through winding 222 to induce a magnetic field in the stator to rotate the rotor.

The control of power switch 220 via driver circuit 333 and NAND gate 330 is very similar to that described above for power switch 218. When it is time to turn on power switch 218, microprocessor 316 enables NAND gate 330 via line 340. Capacitors 311A and 311B then integrate the current level flowing through winding 222 over time and comparators 312 and 314 compare the integrated signal to the current level set by current reference circuit 318. When the integrated signal is less than the reference, flip flop 322 sends a logic level ONE signal to NAND gate 330, thus turning on power switch 220. Current then flows through the winding until the integrated signal exceeds the reference signal. This causes the output from flip flop 322 to transition to a logic level ZERO which turns off power switch 220. One shot 324 then times out a 27-30 microsecond delay to minimize audible noise. Flip flop 322 then sends another logic level ONE to NAND gate 330 to turn power switch 220 back on for another cycle. This process repeats until microprocessor 316 disables NAND gate 300, thus ending the period of current flow through winding 222 in the given direction.

Software is used for operating microprocessor 316 of Fig. 6B.

The software contains the routine for starting up the motor and maintaining an operating speed. In short, control of the motor is organized by Hall cycles which begin with an output from the Hall effect device 238. A 16 bit counter under the variable labeled TINPO then counts the number of 200 microsecond intervals that occur after the most recent Hall signal until the next occurring Hall signal. The TINPO count for the most recent Hall cycle is saved in a variable labeled TINPS. This tells the amount of time taken to complete one Hall cycle. Once the time taken for a Hall cycle is known, the RPM of the rotor is known as well as the position of the rotor for a given TINPO count. Applying this by way of example, if it is desired to turn off winding 222 when the rotor is in a given position, the TINPO count for the position is calculated and the winding is turned off when the calculated TINPO count is reached. As an aside, the 8 least and greatest significant bits for TINPO are identified as TINPOL and TINPOH, respectively. This L/H notation is applied to other 16 bit counter variables as well.

If TINPO exceeds the limit, then the rotor has stayed in one position too long. If the rotor stays in one position for a preset period of time, the microprocessor will go into a locked rotor routine which discharges any overly charged capacitors and provides a time delay before restart is indicated. In operation, the startup begins with the first four complete rotations of the rotor. Each of these rotations is divided into two 180 degree segments. The Hall effect device 238 distinguishes each of the eight 180 degree segments. During each of the segments, positive commutated current is supplied to winding 222 in the appropriate direction during all but the first five milliseconds of the segment. The five millisecond delay allows two milliseconds for the existing current in the winding 222 to decay and provides an additional three milliseconds as a safety factor to prevent "current shoot through" through winding 222. Current is supplied during substantially all of the first eight 180 degree segments to provide additional startup torque.

After the first four complete rotations of the rotor, microprocessor 316 allows commutated dc current to flow through winding 222 during only the first half or 90 degrees of each succeeding 180 degree segment. This procedure is followed until the rotor speed reaches approximately 1300 RPM. By providing current during only one-half of the available period during this time, the torque produced by the motor is reduced which desirably flattens the speed/torque curve for the motor. In other words, it lowers the torque at lower RPMs to roughly match the torque available at higher RPMs. In terms of switching, the power switch 218 or 220 corresponding to the desired direction of current flow through winding 222 is switched on when the Hall signal is first received and is switched off when TINPO reaches TINPS/2.

After the rotor speed exceeds 1300 RPM, microprocessor 316 determines the turn on and turn off times for winding 222 through use of a stored table within the memory of microprocessor 316. In accessing the table, microprocessor 316 first calculates the table pointers OFFDELTA and ONTIME as follows:

$$OFFDELTA = TINPS / 2 - 12 \qquad\qquad [2]$$

$$ONTIME = TINPS / 2 - 12 \qquad\qquad [3]$$

Accordingly, the table pointers are equal to zero when TINPS is equal to 24 or 25. This corresponds to a rotor RPM of about 6000. The succeeding table entries correspond to lower RPM levels for the rotor, which are implemented by the microprocessor depending on the speed or torque which is desired. The last entries in the tables correspond to a rotor RPM of about 1300 below which the automatic operation described above takes over and the winding is energized for one half of each Hall cycle. By dividing TINPS by 2 in calculating the table pointers, the precision of the tables decreases but the size of the tables is also reduced by 2 which requires half as much memory.

After the table pointer OFFDELTA has been calculated, microprocessor 316 retrieves a value from the turn off time table which corresponds to OFFDELTA. Microprocessor 316 then sets the OFFTIM variable equal to the retrieved value. Microprocessor 316 next retrieves a value from the turn on time table which corresponds to the table pointer ONTIME. Microprocessor 316 then calculates the turn on time as follows:

$$ADVTIM = TINPS + turn\ on\ table\ value \qquad\qquad [4]$$

It will be noted that most of the values in the turn on table are negative numbers. Accordingly, the calculated ADVTIM will provide for the turning on of the relevant power switch at a time before the next Hall effect signal. It is necessary to advance the commutation of winding 222 in this way at rotor speeds above 1300 RPM so that the magnetic field can build up in the stator in time to exert force on the rotor in the proper direction. As the speed of the rotor increases, the table values provide an increasing advancement of the angle of commutation to get more torque out of the motor at high speeds.

In view of the above, it will be seen that a given motor can be programmed with different speed and torque curves simply by changing the entries in the turn on and turn off tables. Further, by selecting different turn on and turn off points from those set out above for the startup operation, the startup torque and the time required to reach the desired speed can be programmed as well.

A Cuk dc/dc converter topology with a diode rectifier may be employed at the input of a single phase electronically commutated ac motor (ECM) system. By controlling the converter duty cycle the dc voltage applied to the ECM system is adjusted. As a result, the current command is in phase with the rectified ac supply voltage providing a unity displacement factor of the input ac current.

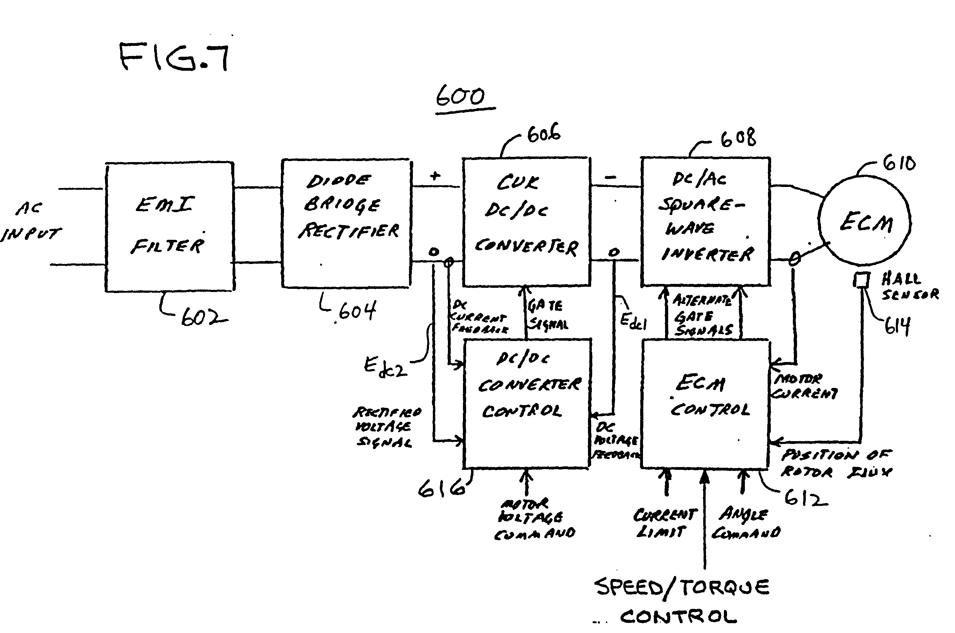

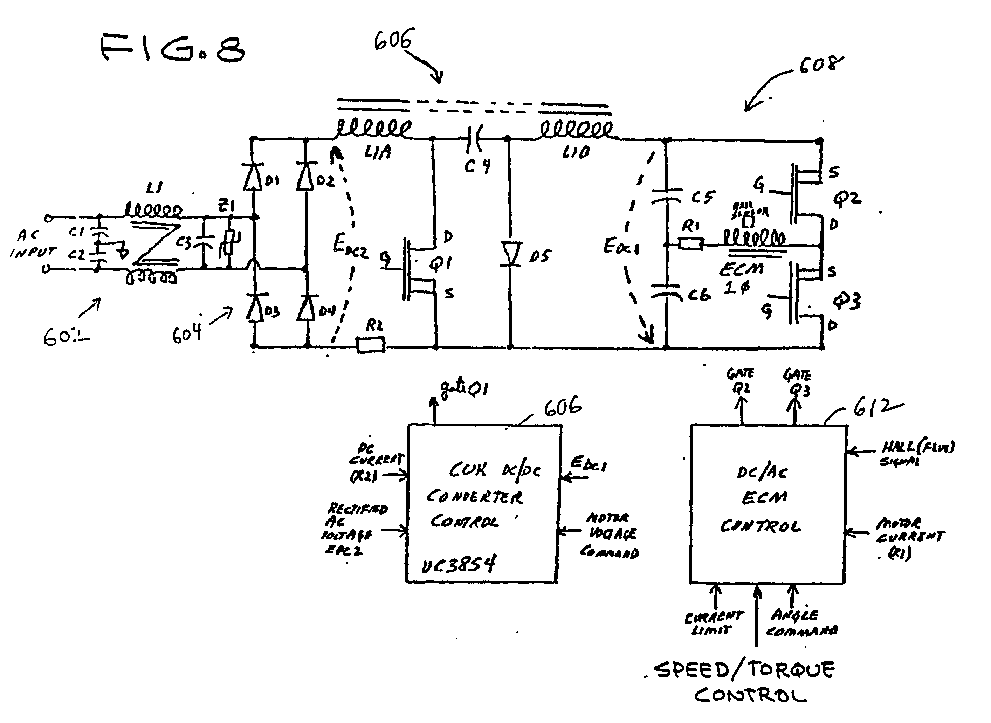

A system 600 is shown on Fig. 7 in block diagram form and the schematic circuit is shuwn in Fig. 8. The system 600 includes a standard electromagnetic interference (EMI) filter 602, a diode bridge rectifier 604, a Cuk dc to dc converter circuit 606, a square wave dc to ac inverter control 608 and an electronically commutated motor (ECM) 610 connected in series. The square wave inverter control 608 accepts motor rotor angle and motor current feedback signals from an ECM control 612 to control the gating of the switches of inverter control 608 in synchronization with the motor back EMF. Motor current feedback may be provided to the ECM control 612 for current limiting but in normal operation the inverter will not employ current chopping during a given half-cycle because the input voltage to the inverter 608 will be controlled and will reduce the need for current chopping. Also, a Hall sensor 614 may be used to provide to control 612 a signal indicative of the position of the rotor flux.

A dc/dc converter control 616 receives dc voltage feedback and a motor voltage command signal. The motor voltage is roughly proportional to motor speed and this signal can serve as the command signal when an overall outer loop such as air flow is provided. A signal that is in phase with the input voltage and has the same waveshape is provided in order that the duty cycle of the dc/dc converter 606 be controlled to maintain a sinusoidal input current waveshape, the fundamental of which is in phase with the line voltage.

Fig. 8 shows a circuit schematic diagram of Fig. 7. The EMI filter 602 is a standard capacitor, inductor, voltage clipper circuit illustrated by reference characters C1-C3, L1 and Z1. The diode rectifier 604 comprises diodes D1-D4. The dc to ac inverter 608 is a single phase center-tapped capacitor circuit including capacitors C5, C6 and solid state MOSFET switches Q2 and Q3. Because of the voltage inversion property of the Cuk converter 696, the MOSFET switches Q2 and Q3 are connected as shown. The Cuk converter 606 is composed of a coupled inductor L1A and L1B, capacitor C4, switch Q1 and diode D5. Control of the on time of switch Q1 controls and regulates the dc voltage appearing on capacitors C5 and C6.

The ECM control 612 uses motor mounted Hall sensors 614 to derive a signal in synchronism with the motor flux. This position signal may be modified with a phase locked loop (not shown) to derive an alternating gate drive signal to switches Q2 and Q3. A motor current sensor, resistor R1, is provided and the absolute value is compared with a current limit signal. If the motor current exceeds the current limit value switches Q2 and Q3 "chop" the motor current by pulse width modulation to maintain it at the current limit value. In normal operation, the dc voltage (Edc1) will be controlled and motor current chopping will not be needed.

The Cuk converter control 606 consists of a dc voltage feedback (Edc1) which is compared to a motor voltage command signal. A second signal (Edc2) which is the rectified ac voltage provided to develop a signal in phase with the input voltage and of sinusoidal waveshape. It is also used in the UC3854 control 606 as a feed forward signal of supply voltage changes. A current sensor R2 is provided to feedback the actual dc current. A pulse width modulated output signal controls switch Q1.

The application of the Cuk converter 606 as the input dc to dc stage of an electronically commutated motor (ECM) drive has the following advantages: unity input displacement factor, reduced peak input current, reduced harmonic input currents, adjustable dc output voltage for input to the inverter, reduced switching losses in the inverter because of reduced PWM, operate from either 115 or 230 volt input and still provide an adjustable voltage from zero up to approximately 300 volts.

This approach uses the Cuk topology as a step-down and step-up ac to dc converter for the input stage of the adjustable speed drive of the ECM 610. The use of the step-down/step-up transfer characteristic of the Cuk converter 606 allows the ECM system 600 to operate on either 115 or 230 volt single phase ac power without switching or selecting the correct input leads. When 230 volt ac power is supplied, the converter 606 operates in the step-down mode providing an adjustable dc voltage from 0 to approximately 300 volts. When 115 volt ac power is supplied, the converter 600 operates first as a step-down converter and then as a step-up converter supplying the inverter 606 with an adjustable dc voltage from 0 to approximately 300 volts.

A single-phase electronically commutated motor (ECM) employing the center-tapped-bus inverter may require power switch gating that is on two different voltage levels from the control circuitry. Level-shifting gating circuitry employing optical-isolators may be used to accomplish the power switch gating for this ECM inverter topology.

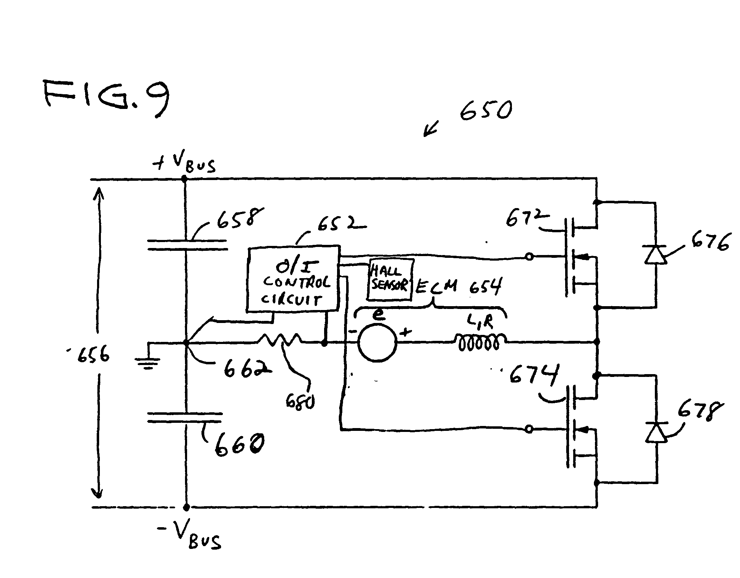

A power circuit 650 having an optical-isolator control circuit 652 for a single-phase ECM 654 employing a center-tapped-bus inverter 656 is illustrated in Fig. 9. The DC bus (+VBUS, -VBUS) is divided in half with identical bus capacitors 658, 660, and one end of the motor phase winding is attached at a center-tap 662 of the bus 656. The other end of the motor phase winding is attached to the mid-point of a pair of power switches 672, 674 in series across bus 656. The ECM 654 can thereby be excited with alternating current by alternatively gating the upper and lower power switches 672, 674. Two flyback diodes 676, 678 provide a path for the motor current to flow until the current can reverse to the proper direction for the associated power switch.

Regulation of the motor phase current preferably requires measurement of the current by some means. One economical current measurement is by measurement of the voltage across a precision resistor 680 placed in series with the motor phase. One practicable placement of the precision resistor is at the lower end of the motor phase leg, with one end of the precision resistor 680 attached to the center-tap 662 of the bus 656, as shown in Fig. 9. It then becomes convenient to reference the bus center-tap 652 as "ground", with all other control circuitry referenced to this ground point as well. The upper rail of the bus 656 becomes large positive voltage, called +VBUS. The lower rail of the bus 656 becomes a large negative voltage, called -VBUS. The upper power switch 672 must be gated by applying to its gate a voltage that is one threshold voltage above +VBUS, and the lower power switch 674 must be gated by applying to its gate a voltage that is one threshold voltage above -VBUS. For typical values of bus voltage and threshold voltage, the lower power switch 674 gating voltage is still a large negative value.

Two different gating voltages are required, both of which are significantly shifted from ground, so level shifting circuitry is required.

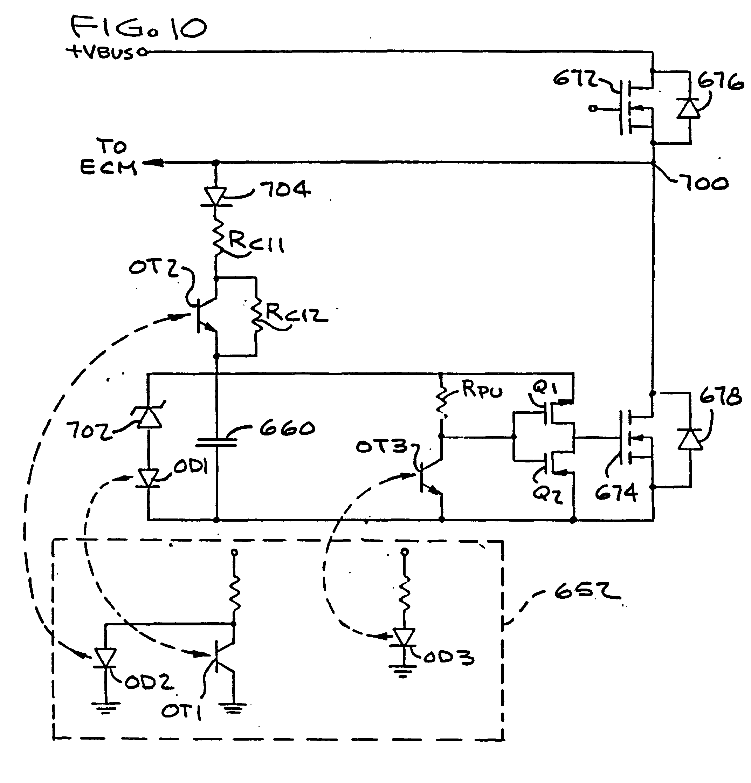

The gating circuitry described here offers an alternative to the transformer type gating circuitry. Optical-isolators are employed in this invention to obtain voltage level shifting. Fig. 10 illustrates the gating circuit for the lower power switch 674. Electric charge to supply the power switch gate is stored in the storage capacitor 660, and it is supplied to the gate when the lower gate signal is applied to the opto-diode OD3 in the I/O control circuit module 652. Current flowing through OD3 makes OD3 emit light onto the base of opto-transistor OT3, making OT3 conduct. When OT3 conducts, the gate of the FET push-pull Q1-Q2 is forced low, and charge from 660 conducts to the power switch gate through Q1. Conversely, when it is desired to remove gating from the power switch, the lower gate signal is removed, opto-diode OD3 ceases conduction, opto-transistor OT3 ceases conduction, the gate of the FET push-pull pair Q1-Q2 is pulled up by pull-up resistor Rpu, and the charge from the power switch gate drains through Q2.

It is necessary to refresh the storage capacitor 660, which can be performed when the motor terminal 700 (e. g., center of pair of switches 672, 674) is pulled to the upper rail (+VBUS) either by forward phase current conduction through the upper power switch 676 or by reverse phase current conduction through the upper flyback diode 676. During refresh mode, opto-diode OD2 will be conducting in the control module. This makes opto-transistor OT2 conduct, and the storage capacitor 660 charges through the path from the upper rail, blocking diode 704, current-limiting resistor Rc11, opto-transistor OT2, through capacitor 660 to the negative rail. The current-limiting resistor Rc11 is of small value to permit fast charging of capacitor 660. When the voltage across capacitor 660 increases to the level of the zener diode 702 voltage plus the forward drop of opto-diode OD1, current conducts through the zener diode 702 and the voltage of capacitor 660 is thereby clamped. This clamping voltage is designed to be the gating threshold voltage of the power switch 674. Current conducting through the zener diode 702 also conducts through opto-diode OD1, which makes opto-transistor OT1 conduct in the control module. This action removes conduction through opto-diode OD2 in the control module, which then halts conduction of opto-transistor OT2. Current-limiting resistur Rc12, which was previously shunted by opto-transistor OT2, is now placed in the refresh circuit, and Rc12 is made large enough to limit the current flowing through the zener diode 702 to safe levels. When the voltage of storage capacitor 660 drops below the clamping level, current ceases conduction in the zener diode - OD1 leg, OT1 turns off, OD2 turns on, OT2 turns on, large resistor Rc12 is shunted, and the storage capacitor recharges quickly through small resistor Rcll.

The blocking diode 704 permits the refresh circuit to disconnect from the motor phase terminal while the lower power switch 674 is conducting, since the motor phase terminal is pulled down to nearly the negative rail. Refreshing of capacitor 660 will occur when the lower power switch 674 is gated off, because the motor phase terminal will immediately swing to the upper rail, initially conducting current through the upper flyback diode 676 and later through the upper power switch 672. No refreshing can occur while the lower power switch 674 is conducting, and during this period, charge is being drained from the storage capacitor 660 by the current flowing in the leg containing opto-transistor OT3 and its pull-up resistor Rpu. To prevent the voltage of the storage capacitor 660 from dropping below the threshold of the power switch 674, it is necessary to provide a reasonable frequency of the refresh operation.

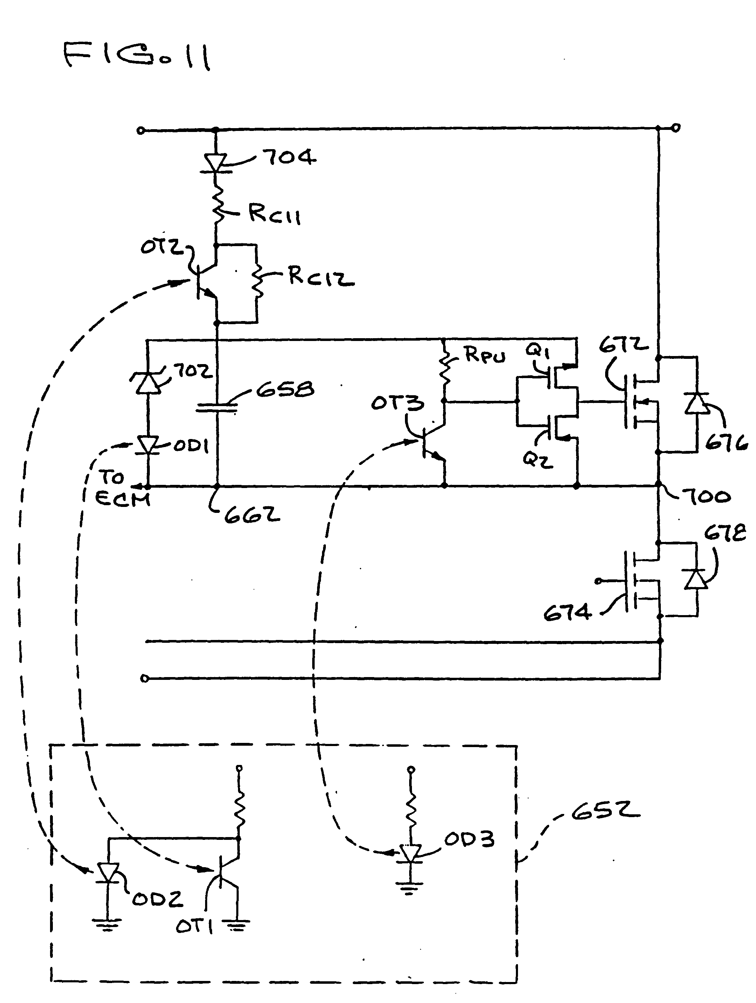

The gating circuit for the upper power switch 672, illustrated in Fig. 11, is identical to Fig. 10, except that it is connected between the upper rail +VBUS and the motor phase terminal. It refreshes while the motor phase terminal is pulled to the lower rail either by conduction through the lower flyback diode 678 or the lower power switch 674.

During the initial power-up of the drive circuit, both refresh circuits conduct simultaneously through each other. One innovation in the circuit of the invention is the technique for switching the values of the current-limiting resistor to permit fast refreshing.

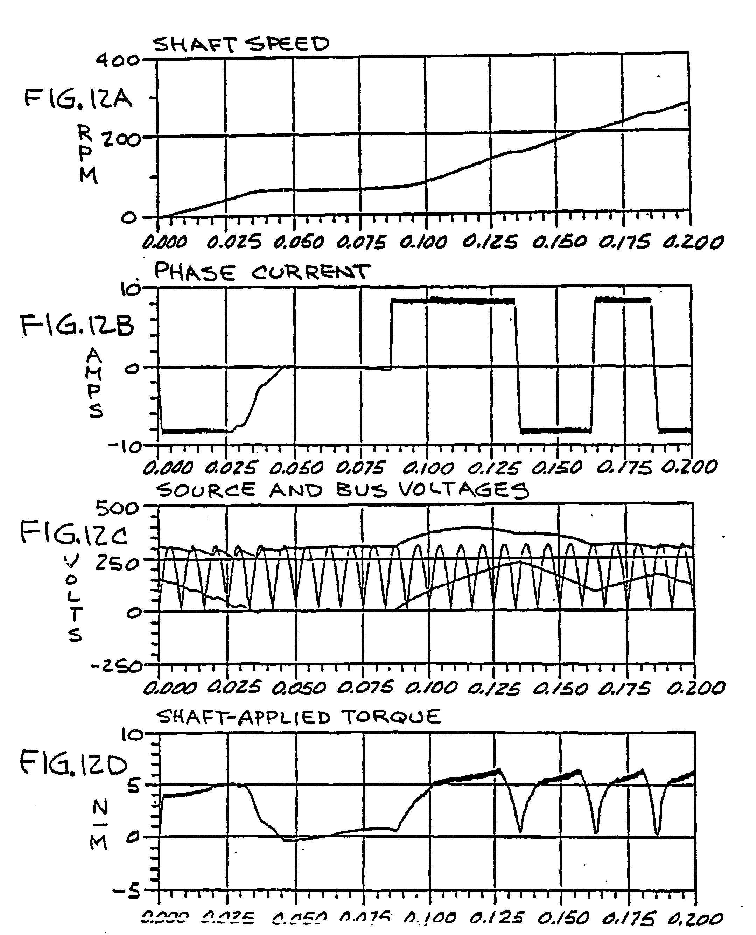

One problem occurs during start-up operation of the motor. A computer program was written to simulate the electrical dynamics of some of the circuits disclosed herein. The simulator also incorporated the mechanical dynamics involving rotor inertia, friction, electromechanical torque, cogging torque, and load torque. The rotor parking position, calculated from the magnetic analysis, is incorporated as an initial condition. Figs. 12A-D show the starting performance of a single phase, single winding electronically commutated motor which is powered and controlled with the circuitry of Fig. 2A. Each of Figs. 12A-D plot the given performance parameter against time. In particular, Fig. 12A shows the shaft speed versus time, Fig. 12B shows the phase current verses time, Fig. 12C shows the source and bus voltages versus time, and Fig. 12D shows the shaft applied torque versus time. It is seen that the split dc bus 152, 154 in Fig. 2A, having voltages as indicated in Fig. 12C, becomes unbalanced during starting and becomes cut-off from both the motor and the ac source. The unbalancing occurs as a result of current regulating action described above. The rotor must coast until a motor polarity reversal is obtained, provided there is sufficient angular momentum to carry the rotor past restorative action in the cogging torque.

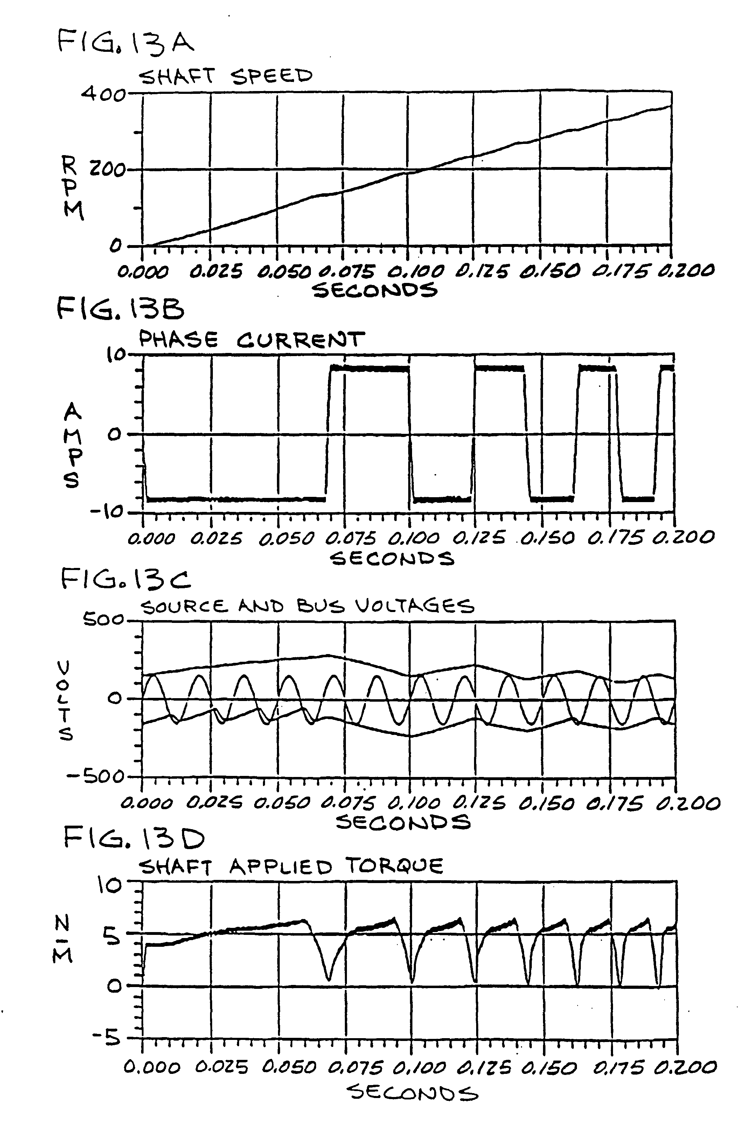

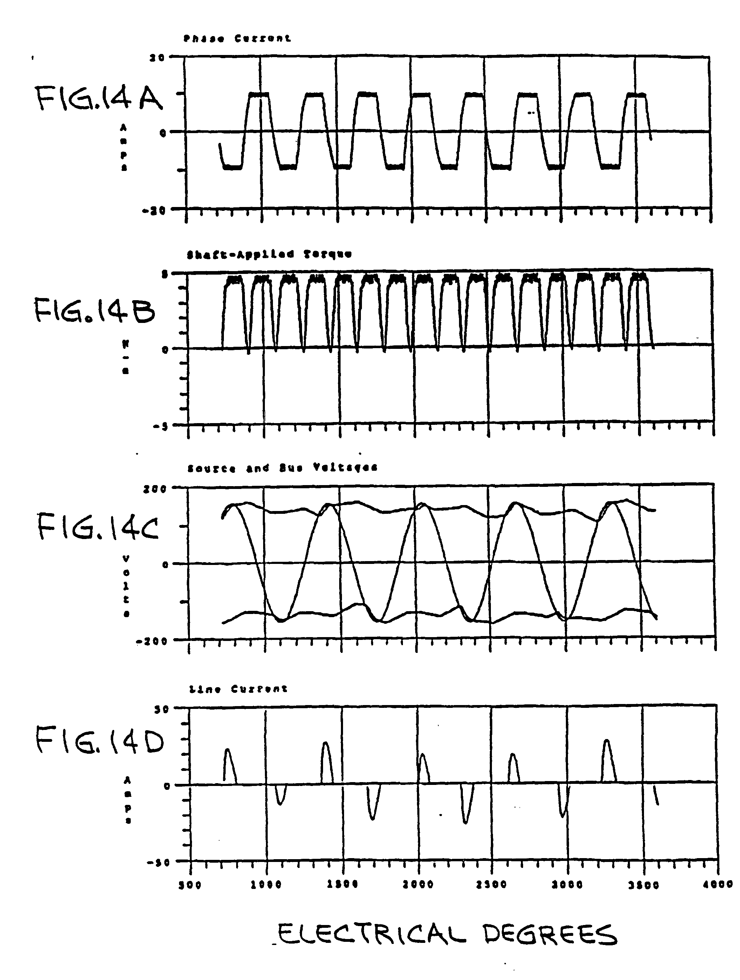

Figs. 13A-D show the starting performance of a single phase, single winding electronically commutated motor powered and controlled with the circuitry of Fig. 3A. The waveforms were also obtained from a computer simulation. At time zero, the motor resting position is arbitrarily chosen such as to require negative motor current, depicted in the second waveform shown by Fig. 13B, to produce positive shaft torque, depicted in the fourth waveform shown by Fig. 13D. The torque applied to the motor and load inertia produces an acceleration of the shaft speed, depicted in the first waveform shown by Fig. 13A. During the period of negative motor current, the charge on the lower bus capacitor is repetitively replenished from the line, while the upper bus capacitor becomes overcharged as a result of the current regulation action described earlier. Eventually, the shaft motion carries the rotor to the position where positive current is required to produce positive torque; this transition is depicted in the waveform of the motor current shown in Fig. 13B. At the moment of transition, the upper capacitor voltage has become charged to 280 volts from its nominal working voltage of 156 volts as shown in Fig. 13C. After the motor phase current changes to positive direction, the lower capacitor becomes overcharged, although to a lesser degree, as a result of current regulation action. As the motor accelerates, less and less capacitor overcharging is observed, and eventually the constant speed operation illustrated in Figs. 14A-D is obtained. One important consequence of the starting operation is that the bus capacitors appear to have to be over-rated in voltage capability for events that last only a few milli-seconds.

Figs. 14A-D illustrate various waveforms that describe the operation of the single phase, single winding electronically commutated motor controlled with the circuitry of Fig. 3A during constant-speed motion. The waveforms were obtained from a computer simulation program. Fig. 14A illustrates the waveform for the motor phase current, which is shaped into an approximate rectangular wave by the current regulation action just described. The alternating motor current, interacting with the alternating magnet direction, produces a uni-directional shaft torque, illustrated in the second waveform shown in Fig. 14B. The third waveform, shown by Fig. 14C, illustrates the alternating source (i.e., line) voltage (VAC) and the voltage of the upper rail +VBUS and lower rail -VBUS of the DC bus. The rail voltages wander by a certain amount, responding to motor current being drawn or supplied and to line current being supplied. Moments where the line voltage exceeds the rail voltages are distinct, and during these moments, current is drawn from the line, as illustrated in the fourth waveform shown by Fig. 14D. It is important to note that the rail voltages do not exceed the peak line voltage by an appreciable amount, therefore, for the purpose of sizing the voltage rating of the bus capacitors, it should be adequate to specify a voltage rating equal to the peak of the line voltage (in this example, $\sqrt{2} \times 110 = 156$ volts). Bus capacitors are typically rated for a specified constant working voltage with a slightly greater short-duration surge voltage. A commercial standard appropriate for the example here is 160 working volts and 200 surge volts. It may be uneconomical to specify a bus capacitor for a greater voltage than is needed, because the volume and the cost of the capacitor increases with the voltage rating.

A single-phase electronically commutated motor (ECM) employing the center-tapped-bus inverter can be subjected to large overvoltages in the DC bus during starting operation, requiring over-rated bus capacitors that are uneconomical. In one embodiment of the invention, a bus voltage regulation technique prevents the overvoltage and permits normally rated bus capacitors. A further consideration is that of destructive failure of components resulting from mishap. If the shaft system were to become bound for some reason, perhaps from debris becoming lodged in the load, one of the capacitors in the circuit of Fig. 3A would become steadily overcharged to be the point of dielectric failure.

One embodiment prevents overcharging of the bus capacitors by applying a hysteresis band regulator to each bus capacitor. The upper level of the hysteresis band would be conveniently set to the surge voltage rating of the bus capacitor, while the lower level would be set at some smaller value. When the upper band level is reached, control action reverses the motor current direction, which forces the capacitor to discharge. When the capacitor voltage discharges to the lower hysteresis band level, the original current direction is restored.

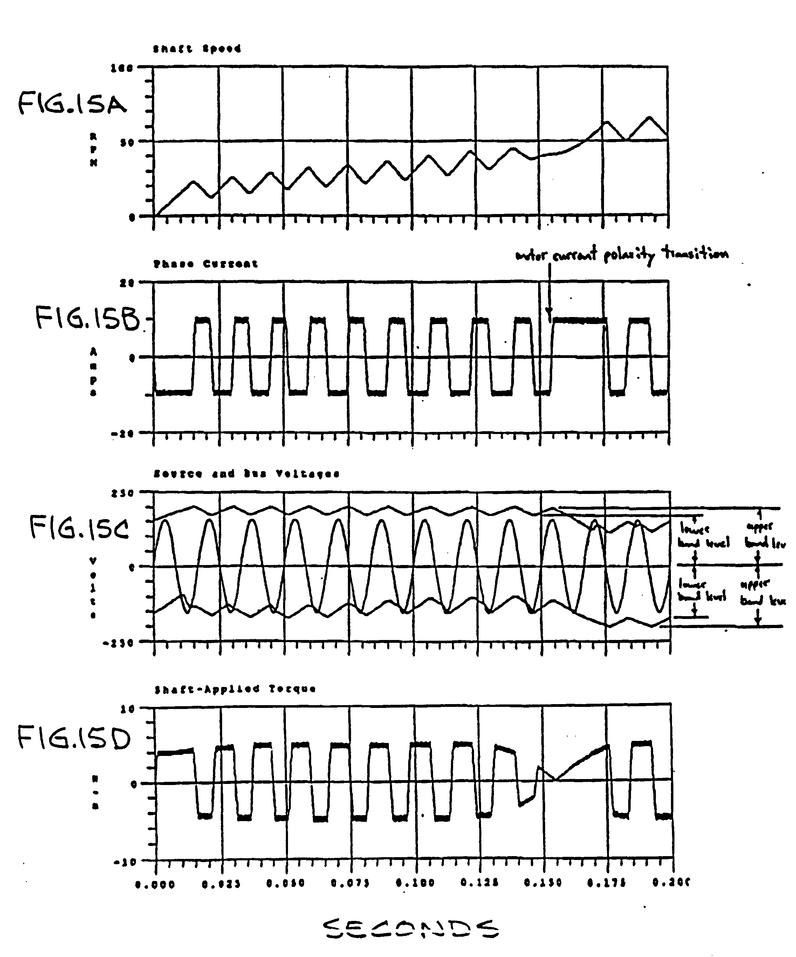

The regulation and control operation is illustrated in the waveforms of Figs. 15A-D and continued to Figs.

16A-D. The hysteresis band levels are set at 200 volts for the upper level and 175 volts for the lower level. As before, the initial direction of the motor current is negative, causing the upper capacitor to overcharge. When the voltage of the upper capacitor reaches the upper hysteresis band level, the control acts to reverse the motor current direction to positive, and the upper bus capacitor starts to discharge. Unfortunately, the current reversal also causes the torque to reverse, and the shaft speed decreases. Once the upper capacitor voltage decrease to the lower hysteresis band level, the original current direction is restored (to negative current), and the shaft speed increases again while the upper capacitor voltage again charges upward. The control action repeats many times, and despite the applied negative torque occurring with each bus regulation action, there is a net positive torque that permits an overall positive shaft acceleration.

The shaft motion carries the rotor to the position where positive current is required to produce positive torque, at .155 second in the waveforms of Figs. 15A-D. Immediately, the lower bus capacitor starts to overcharge, and when the regulation action is applied to the lower capacitor, the motor current direction is reversed from positive to negative. Similar to before, the lower capacitor discharges while the torque reversal causes the shaft speed to decrease. When the voltage of the lower bus capacitor decreases to the lower hysteresis band level, the original motor current direction is restored (to positive current), and everything repeats.

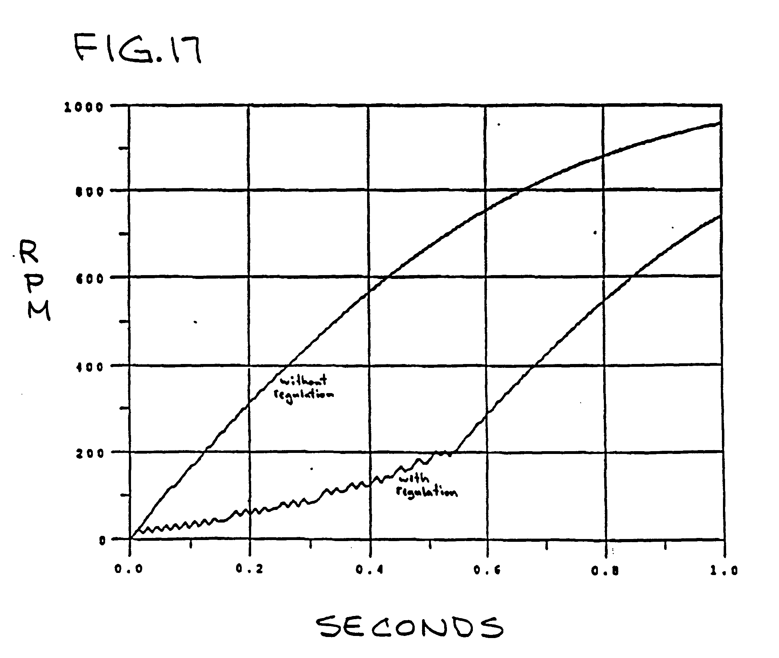

The small net positive torque resulting from the bus regulation action causes the shaft acceleration to be considerably smaller than it would be without bus regulation. Eventually, however, at a great enough speed, bus regulation becomes no longer necessary, and the shaft acceleration can assume its natural rate. Fig. 17 illustrates a comparison between the shaft acceleration with and without bus regulation. Bus regulation relinquishes at about 200 RPM, and the resulting delay caused by bus regulation is less than half a second. It is contemplated that the bus regulators can be implemented with op-amp comparators and logic gates, or with microprocessor software if the rail voltages are digitized with A/D converters.

In building a stator for a motor, Fig. 4 shows a portion of a typical salient pole ECM stator. A feature of such machines is a stator tooth 250 having a relatively slender portion 251 with a wide tip 255 to spread the flux into the energy conversion air gap region between the rotor magnet 254 and the stator tooth 250. In view of the shape of the stator tooth 250, the conventional way to wind the pole is to "sew" the wire around the stator tooth for the required number of turns. The disadvantage of this approach is that the resulting coil has a random nature with many angular crossings of the insulated copper strands in the winding. This causes poor utilization of the space within the coil. Further, space must be left between the coils on adjacent stator teeth in order to allow access for the winding machine components. In addition, the coils cannot be wound tightly for risk of stretching or breaking the conductors or the insulation around the conductors. Accordingly, conventional winding methods use only approximately 34 percent of the available space on the stator core cross section.

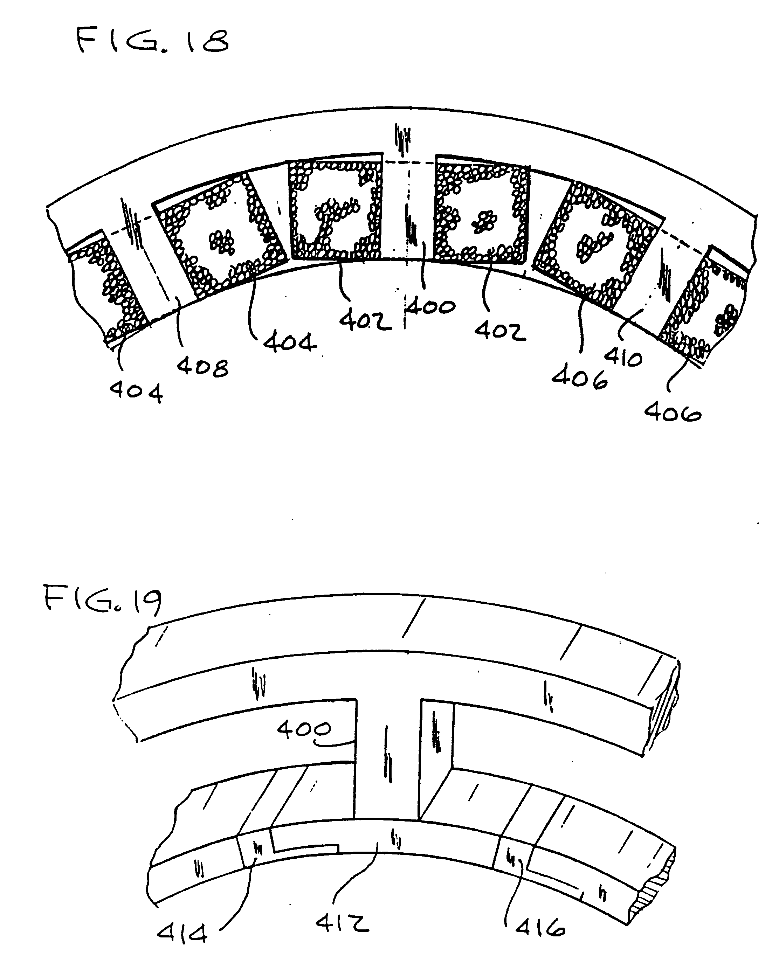

One solves the problem by allowing the removal of the tip 255 of the stator tooth 250 during installation of the winding coil. The winding coil is then wound on a conventional high speed bobbin coil winding machine. Such coils are typically wound in an orderly manner without crossovers except at the ends of the layers. This provides better use of the cross-sectional area of the coils for packing conductors. An even greater area of conductors can be packed if rectangular wire is used, as is conventionally used on larger motors, since the orientation of the rectangular wire is readily controlled during bobbin winding. After winding, the coils are slid over the slender portion 251 of the stator tooth. For example, Fig. 18 shows a stator tooth 400 from which the stator tip has been removed. A coil 402 wound on a conventional high speed bobbin coil winding machine has been slid over the tooth 400. Additional coils 404 and 406 are shown wrapped on adjacent stator teeth 408 and 410 respectively.

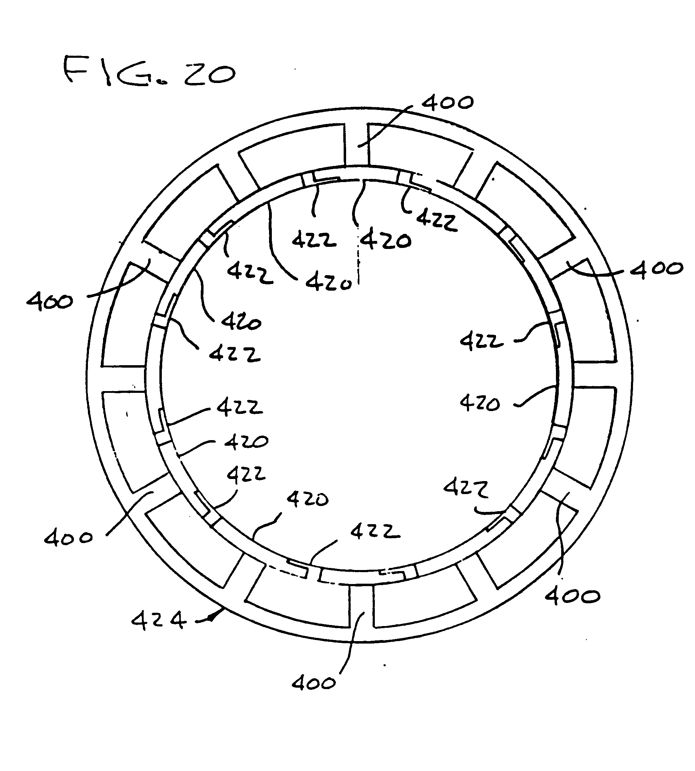

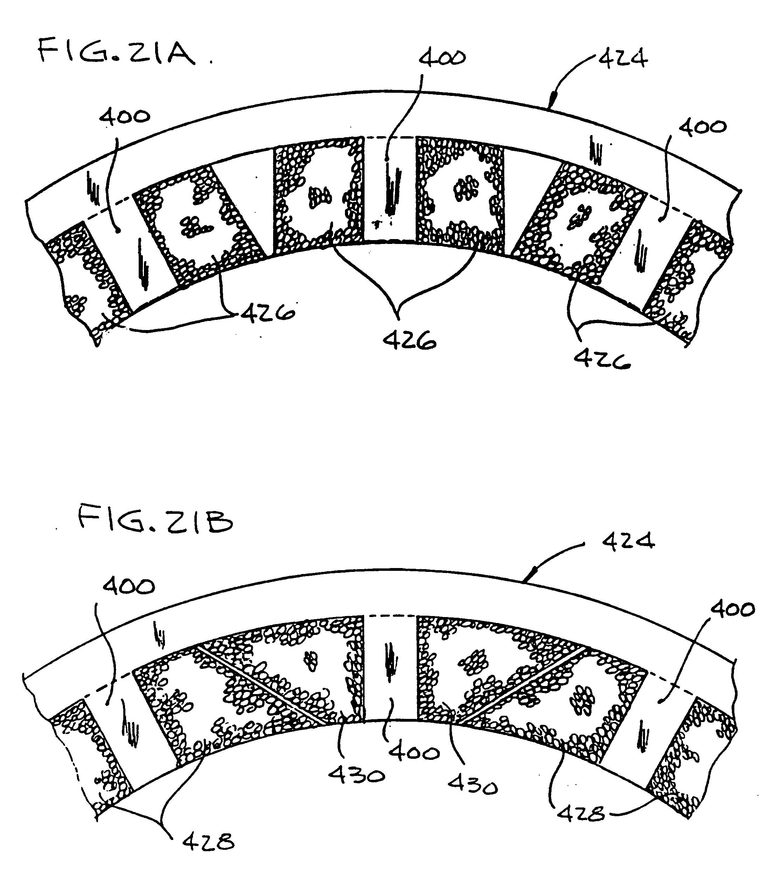

In reapplying a stator tip 412 to the stator tooth 400 in Fig. 19, it is possible to make laminated pole tips similar to magnetic slot wedges and attach them individually to each pole. However, this is time consuming and, therefore, expensive. As an alternative, one contemplates an annulus of alternating sections of molded or extruded powered iron/plastic composite and non-magnetic plastic sections which interlock. Fig. 19 shows a section of such a construction. Fig. 19 includes a stator tip 412 sandwiched in the annular ring on either side by an interlockiny non-magnetic plastic section 414 and an interlocking non-magnetic plastic section 416. These non-magnetic plastic sections interlock with additional stator tips (not shown) and additional alternating plastic non-magnetic sections (not shown) until the annular ring is complete. As an alternative to using several interlocking pieces for applying the stator tips 412, Fig. 20 shows a one-piece molded or co-extruded annular ring 418. One piece ring 418 contains a plurality of alternating powered iron/plastic composite stator tips 420 and non-magnetic plastic sections 422. One piece ring 418 preserves the spacing of the stator tips 420. Once the coils are in place around stator teeth 400, one piece ring 418 is slipped into place and located with suitable keys using conventional positioning techniques. All of the teeth for a stator 424 shown in Fig. 20 are thus completed in one simple operation.

A further design for increasing stator space utilization is shown in Fig. 21A. In Fig. 21A, each of windings 426 are wound to conform their shape to the shape of the yoke and stator teeth. A further improvement is shown in Fig. 21B where a plurality of coils 428 and 430 are wound with a trapezoidal cross section. The trapezoidal shape allows the coils 428 and 430 to be nested within the available space. The broad base coils 430 are first inserted on alternate teeth 400 followed by the narrow based coils 428 on the remaining teeth. Electrical connections to the coils may be made via a circuit board on one end of the stator 424.

It is also contemplated that the stator may be in the form illustrated in coassigned, copending U.S. Patent Application Serial No. 07/863,900 filed April 6, 1992, titled INTEGRAL MOTOR AND CONTROL, the entire disclosure of which is incorporated herein by reference. In particular, it is contemplated that the motor may include a C-frame having a single bobbin wound winding stage. The motor provides more power than the motor of the aforementioned application because the motor employs the entire winding stage as compared to a center-tap configuration. Also, the motor employs a longer stack and larger permanent magnets.

In view of the above, it will be seen that the several objects of the invention are achieved and other advantageous results attained.

**Claims**

1. A method of operating a dynamoelectric machine having a stator with at least one winding (170, 222), a rotor, a direct current bus (152, 154; 210, 212), and power switches (162, 164, 166,168; 214, 216, 218, 220) connected in series across the bus
       **characterised by** the steps of:

       providing two power switches (166, 168; 218, 220);
       providing a voltage divider (162,164;214,216) connected across the rails of the bus (152,154;210,212), the voltage divider having a terminal (184;224) providing a voltage between the voltages of the rails of the bus and intermediate the ends of the voltage divider;
       connecting one end (186,226) of the at least one winding (170,222) between the switches and connecting the other end to the terminal (184;224) of the voltage divider;
       applying through rectifiers (206, 208) an alternating current voltage (160,202) between the rails of the direct current bus (152,154;210,212) and the terminal (184;224) of the voltage divider wherein the voltage across the direct current bus and the voltage of the waveform applied to the at least one winding are greater than the peak voltage of the applied alternating current voltage; and
       controlling the switches in response to a sensed position of the rotor to apply current through the winding so that the winding generates a magnetic field for rotating the rotor at a desired speed and torque.

2. The method of claim 1, wherein there are only two power switches, the voltage divider includes two capacitors (162, 164; 214, 216) connected in series across the bus, the winding being connected between the capacitors.

3. The method of claims 1 or 2, wherein the alternating current voltage is applied to a connection point (224) between the two capacitors.

4. The method of claims 1, 2 or 3, wherein the controlling provides a start-up series of pulses to the switches when the speed of the machine is below a value and an operating set of pulses when the speed is greater than the value.

5. The method of claim 4,wherein the start-up series of pulses is provided when current is supplied through the winding during a first half of each successive 180° angle of rotation of the rotor when the speed of the machine is below the value.

6. The method any one of the preceding claims, wherein the machine has a first mode of operation wherein the current is applied through the winding during more than half of each successive 180° angle of rotation of the rotor and wherein the machine has a second mode of operation after operation of the first mode wherein current is applied through the winding only during a first half of each successive 180° angle of rotation of the rotor.

7. A dynamoelectric machine having a stator with at least one winding (110, 170, 222), a rotor, a direct current bus (128; 152, 154; 210, 212) and power switches (102, 104, 106, 108; 162, 164, 166, 168; 214, 216, 218, 220) connected in series across the bus
       **characterized by**:

       two power switches (166, 168; 218, 220)
       a voltage divider (162,164;214,216) connected across the rails of the bus (152,154;210,212), the voltage divider having a terminal (184;224) providing a voltage between the voltages of the rails of the bus;

one end (186;226) of the winding (170;222) being connected between the two power switches and the other end (184;224) connected to the terminal (184;224) of the voltage divider;

means (182, 232) for sensing the position of the rotor; and

a control circuit (176, 232) responsive to the means for sensing the position of the rotor and operationally controlling the switches to apply current through the winding so that the winding generates a magnetic field for rotating the rotor at a desired speed or torque.

8. The machine of claim 7, having only two power switches and comprising a rectifier circuit (604) for rectifying a voltage coupled to terminals by an alternating current source;

a converter (606) for converting the rectified voltage into the direct current bus voltage; and

an inverter (608) for selectively inverting the direct current bus voltage to provide an alternating current square wave which is applied to the winding.

9. The machine of claim 8, wherein the converter comprises a Cuk dc/dc converter and a control therefor responsive to the direct current bus voltage and the direct current and voltage provided by the rectifier circuit.

10. The machine of claim 7, wherein there are only two power switches, (166, 168; 218, 220), the voltage divider includes two capacitors (162, 164; 214, 216) connected in series across the bus, the winding being connected between the capacitors.

11. The machine of claim 10, wherein a center tapped bus inverter (608) having upper and lower rails which are connected to and through the two power switches (Q2, Q3) to the one end of the winding, and having a center tap connected to the other end of the winding, the center tapped bus inverter being part of the direct current bus, the two capacitors (C6, C5) being connected in series so that the center tap is connected between two capacitors; and

a current monitor (614) connected to the center tap, the control circuit being responsive to the current monitor for regulating current provided to the capacitors.

12. The machine of claim 11, wherein the center tapped bus inverter comprises the first and second terminals and wherein the first terminal is connected to the center tap and the second terminal is connected to the upper and lower rails.

13. The machine of claims 10 to 12, wherein an alternating current voltage is applied to a connection point (224) between the two capacitors.

14. The machine of any one of claims 7 to 13,wherein first (210) and second (224) terminals are connected to an alternating current source (202), the first terminal being connected to the direct current bus via a rectifier circuit (206,208) and the second terminal being connected to the voltage divider so that the voltage across the bus and applied to the at least one winding is greater than the peak voltage applied to the terminals by the alternating current source.

15. The machine of any one of claims 7 to 14, wherein the stator has a magnetically asymmetric configuration with respect to the rotor, the configuration parking the rotor in a predetermined rest position which is a positive torque starting position.

16. The machine of claim 15, wherein the stator includes a plurality of teeth (400), the teeth having faces defining an aperture for receiving the rotor, the faces of the stator teeth and the rotor defining an air gap therebetween that is asymmetrical relative to a center line of each tooth of the stator.

17. The machine of claim 16, wherein each tooth having a base and a removable tip (420) whereby the winding can be placed on the stator between the bases without the tip in place on the base and the tip can be added to the base thereafter.

18. The machine of claim 17, wherein the tips are part of a removable annular ring located between the rotor and the bases of the teeth.

19. The machine of any one of claims 7 to 18, wherein the control circuit includes a circuit portion (316) operative to provide a start-up series of pulses to the switches when the speed of the motor is below a value and an operating

EP 0 613 234 B1

set of pulses when the speed is greater than the value.

20. The machine of claim 19, wherein the start-up series of pulses is provided when current is supplied through the winding during a first half of each successive 180° angle of rotation of the rotor when the speed of the machine is below the value.

21. The machine of any one of claims 7 to 20,wherein the machine has a first mode of operation wherein the current is applied through the winding during more than half of each successive 180° angle of rotation of the rotor and wherein said machine has a second mode of operation after operation of the first mode wherein current is applied through the winding only during a first half of each successive 180° angle of rotation of the rotor.

22. The machine of any one of claims 7 to 21 wherein the control circuit includes a portion thereof operative for advancing the angle of commutation of the switches.

23. The machine of any one of claims 7 to 22 comprising a single phase, single winding electronically commutated dynamoelectric machine.

24. The machine of any one of claims 7 to 23 wherein the control circuit is responsive to an input signal representative of the desired speed or torque of the machine.

25. The machine of claim 24 wherein the two switches are alternately gated.


**Patentansprüche**

1. Verfahren zum Betreiben einer dynamoelektrischen Maschine mit einem Stator, der wenigstens eine Wicklung (170, 222) aufweist, einem Rotor, einem Gleichstrombus (152, 154; 210, 212) und Leistungsschaltern (162, 164, 166,168; 214, 216, 218, 220), die in Reihe über den Bus geschaltet sind,
   **gekennzeichnet durch** die Schritte:

   Bereitstellen von zwei Leistungsschaltern (166, 168; 218, 220),
   Bereitstellen eines Spannungsteilers (162, 164; 214, 216), der über die Schienen von dem Bus (152, 154; 210, 212) geschaltet ist, wobei der Spannungsteiler einen Anschluß (184; 224) hat, der eine Spannung zwischen den Spannungen der Schienen von dem Bus und zwischen den Enden des Spannungsteilers liefert,
   Verbinden von dem einen Ende (186, 226) von der wenigstens einen Wicklung (170, 222) zwischen die Schalter und Verbinden des anderen Endes mit dem Anschluß (184; 224) des Spannungsteilers,
   Anlegen einer Wechselstromspannung (160, 202) über Gleichrichter (206, 208) zwischen die Schienen von dem Gleichstrombus (152, 154; 210, 212) und den Anschluß (184; 224) von dem Spannungsteiler, wobei die Spannung über dem Gleichstrombus und die Spannung, die an die wenigstens eine Wicklung angelegt ist, grösser sind als die Spitzenspannung der angelegten Wechselstromspannung, und
   Steuern der Schalter als Antwort auf eine abgetastete Rotorstellung, um Strom **durch** die Wicklung so zuzuführen, daß die Wicklung ein Magnetfeld zum Drehen des Rotors bei einer gewünschten Drehzahl und einem gewünschten Drehmoment zu erzeugen.

2. Verfahren nach Anspruch 1, wobei es nur zwei Leistungsschalter gibt, der Spannungsteiler zwei Kondensatoren (162, 164; 214, 216) enthält, die in Reihe über den Bus geschaltet sind, die Wicklung zwischen die Kondensatoren geschaltet ist.

3. Verfahren nach Anspruch 1 oder 2, wobei die Wechselstromspannung an einen Verbindungspunkt (224) zwischen den zwei Kondensatoren angelegt ist.

4. Verfahren nach Anspruch 1, 2 oder 3, wobei das Steuern eine Startpulsserie an die Schalter liefert, wenn die Drehzahl der Maschine unter einem Wert ist, und einen Betriebspulssatz liefert, wenn die Drehzahl grösser als der Wert ist.

5. Verfahren nach Anspruch 4, wobei die Startpulsserie geliefert wird, wenn Strom durch die Wicklung während einer ersten Hälfte von jeder aufeinanderfolgenden 180° Winkeldrehung des Rotors zugeführt wird, wenn die Drehzahl der Maschine unter dem Wert ist.

**15**

**6.** Verfahren nach einem der vorstehenden Ansprüche, wobei die Maschine einen ersten Betriebsmodus hat, bei dem der Strom durch die Wicklung während mehr als der Hälfte jeder aufeinanderfolgenden 180° Winkeldrehung des Rotors zugeführt wird, und wobei die Maschine einen zweiten Betriebsmodus nach dem Betrieb des ersten Modus hat, bei dem Strom durch die Wicklung nur während einer ersten Hälfte von jeder aufeinanderfolgenden 180° Winkeldrehung des Rotors zugeführt wird.

**7.** Dynamoelektrische Maschine mit einem Stator, der wenigstens eine Wicklung (110, 170, 222) aufweist, einem Rotor, einem Gleichstrombus (128; 152, 154; 210, 212) und Leistungsschaltern (102, 104, 106, 108; 162, 164, 166,168; 214, 216, 218, 220), die in Reihe über den Bus geschaltet sind,

**gekennzeichnet durch**:

zwei Leistungsschalter (166, 168; 218, 220),
einen Spannungsteiler (162, 164; 214, 216), der über die Schienen von dem Bus (152, 154; 210, 212) geschaltet ist, wobei der Spannungsteiler einen Anschluß (184; 224) hat, der eine Spannung zwischen den Spannungen der Schienen von dem Bus liefert,
wobei das eine Ende (186; 226) der Wicklung (170; 222) zwischen die zwei Leistunsschalter geschaltet ist und das andere Ende mit dem Anschluß (184; 224) des Spannungsteilers verbunden ist,
eine Vorrichtung (182, 232) zum Abtasten der Stellung des Rotors und
eine Steuerschaltung (176,232), die auf die Abtastvorrichtung der Rotorstellung anspricht und operativ die Schalter steuert, um Strom **durch** die Wicklung so zuzuführen, daß die Wicklung ein Magnetfeld zum Drehen des Rotors bei einer gewünschten Drehzahl oder einem gewünschten Drehmoment erzeugt.

**8.** Maschine nach Anspruch 7, wobei es nur zwei Leistungsschalter gibt und eine Gleichrichterschaltung (604) zum Gleichrichten einer Spannung vorgesehen ist, die durch eine Gleichstromquelle mit Anschlüssen gekoppelt ist,

einen Wandler (606) zum Wandeln der gleichgerichteten Spannung in die Gleichstrom-Busspannung und einen Wechselrichter (608) zum selektiven Wechselrichten der Gleichstrom-Busspannung, um eine Wechselstrom-Rechteckwelle zu liefern, die an die Wicklung angelegt wird.

**9.** Maschine nach Anspruch 8, wobei der Wandler einen Cuk DC/DC Wandler und eine Steuerung dafür aufweist, die auf die Gleichstrom-Busspannung und den Gleichstrom und die Spannung anspricht, die von der Gleichrichterschaltung geliefert wird.

**10.** Maschine nach Anspruch 7, wobei es nur zwei Leistungsschalter (166, 168; 218, 220) gibt, der Spannungsteiler zwei Kondensatoren (162, 164; 214, 216) enthält, die in Reihe über den Bus geschaltet sind, die Wicklung zwischen die Kondensatoren geschaltet ist.

**11.** Maschine nach Anspruch 10, wobei ein Buswechselrichter (608) mit Mittelanzapfung obere und untere Schienen, die mit und durch die zwei Leistungsschalter (Q2, Q3) mit dem einen Ende der Wicklung verbunden sind, und eine Mittelanzapfung hat, die mit dem anderen Ende der Wicklung verbunden ist, wobei der Buswechselrichter mit Mittelanzapfung Teil des Gleichstrombus ist, wobei die zwei Kondensatoren (C6, C5) so in Reihe geschaltet sind, daß die Mittelanzapfung zwischen zwei Kondensatoren verbunden ist, und
ein Strommonitor (614) mit der Mittelanzapfung verbunden ist, wobei die Steuerschaltung auf den Strommonitor anspricht zum Regeln des an die Kondensatoren gelieferten Stroms.

**12.** Maschine nach Anspruch 11, wobei der Buswechselrichter mit Mittelanzapfung erste und zweite Anschlüsse aufweist und wobei der erste Anschluß mit der Mittelanzapfung und der zweite Anschluß mit den oberen und unteren Schienen verbunden ist.

**13.** Maschine nach den Ansprüchen 10 bis 12, wobei eine Wechselstromspannung an einen Verbindungspunkt (224) zwischen den zwei Kondensatoren angelegt ist.

**14.** Maschine nach einem der Ansprüche 7 bis 13, wobei erste (210) und zweite (224) Anschlüsse mit einer Wechselstromquelle (202) verbunden sind, der erste Anschluß mit dem Gleichstrombus über eine Gleichrichterschaltung (206, 208) verbunden ist und der zweite Anschluß mit dem Spannungsteiler verbunden ist, so daß die Spannung über dem Bus und die an die wenigstens eine Wicklung angelegte Spannung grösser ist als die Spitzenspannung, die durch die Wechselstromquelle an die Anschlüsse angelegt ist.

**15.** Maschine nach einem der Ansprüche 7 bis 14, wobei der Stator eine magnetisch asymmetrische Konfiguration in bezug auf den Rotor hat, wobei die Konfiguration den Rotor in einer vorbestimmten Ruheposition parkt, die eine Startposition mit positivem Drehmoment ist.

**16.** Maschine nach Anspruch 15, wobei der Stator mehrere Zähne (400) mit Stirnflächen aufweist, die eine Öffnung zur Aufnahme des Rotors bilden, wobei die Stirnflächen der Statorzähne und der Rotor dazwischen einen Luftspalt bilden, der relativ zu einer Mittellinie von jdem Zahn des Stators asymmetrisch ist.

**17.** Maschine nach Anspruch 16, wobei jeder Zahn eine Basis und eine entfernbare Spitze (420) hat, wodurch die Wicklung auf dem Stator zwischen den Basen ohne die Spitze in ihrer Lage auf der Basis angeordnet und die Spitze anschließend zu der Basis hinzugefügt werden kann.

**18.** Maschine nach Anspruch 17, wobei die Spitzen Teil von einem entfernbaren Kreisring sind, der zwischen dem Rotor und den Basen der Zähne angeordnet ist.

**19.** Maschine nach einem der Ansprüche 7 bis 18, wobei die Steuerschaltung einen Schaltungsabschnitt (316) aufweist, der eine Startpulsserie an die Schalter liefert, wenn die Drehzahl der Maschine unter einem Wert ist, und einen Betriebspulssatz liefert, wenn die Drehzahl grösser als der Wert ist.

**20.** Maschine nach Anspruch 19, wobei die Startpulsserie geliefert wird, wenn Strom durch die Wicklung während einer ersten Hälfte von jeder aufeinanderfolgenden 180° Winkeldrehung des Rotors zugeführt wird, wenn die Drehzahl der Maschine unter dem Wert ist.

**21.** Maschine nach einem der Ansprüche 7 bis 20, wobei die Maschine einen ersten Betriebsmodus hat, bei dem der Strom durch die Wicklung während mehr als der Hälfte jeder aufeinanderfolgenden 180° Winkeldrehung des Rotors zugeführt wird, und wobei die Maschine einen zweiten Betriebsmodus nach dem Betrieb des ersten Modus hat, bei dem Strom durch die Wicklung nur während einer ersten Hälfte von jeder aufeinanderfolgenden 180° Winkeldrehung des Rotors zugeführt wird.

**22.** Maschine nach einem der Ansprüche 7 bis 21, wobei die Steuerschaltung einen Abschnitt aufweist, der den Kommutierungswinkel der Schalter nach vorn verschiebt.

**23.** Maschine nach einem der Ansprüche 7 bis 22, enthaltend eine einphasige, elektronisch kommutierte dynamoelektrische Maschine mit einer einzigen Wicklung.

**24.** Maschine nach einem der Ansprüche 7 bis 23, wobei die Steuerschaltung auf ein Eingangssignal anspricht, das die gewünschte Drehzahl oder das gewünschte Drehmoment der Maschine darstellt.

**25.** Maschine nach Anspruch 24, wobei die zwei Schalter abwechselnd angesteuert sind.


**Revendications**

**1.** Procédé d'emploi d'une machine dynamoélectrique comportant un stator ayant au moins un enroulement (170, 222), un rotor, un bus de courant continu (152, 154; 210, 212), et des commutateurs de puissance (162, 164, 166, 168; 214, 216, 218, 220) connectés en série entre le + et le - du bus
**caractérisé par** les étapes consistant à :

fournir deux commutateurs de puissance (166, 168; 218, 220);
fournir un diviseur de tension (162, 164; 214, 216) connecté entre les rails du bus (152, 154; 210, 212), le diviseur de tension ayant une borne (184; 224) fournissant une tension entre les tensions des rails du bus et intermédiaire entre les extrémités du diviseur de tension;
connecter une extrémité (186, 226) de l'enroulement au nombre d'au moins un (170, 222) entre les commutateurs et connecter l'autre extrémité à la borne (184; 224) du diviseur de tension;
appliquer grâce à des redresseurs (206, 208) une tension alternative (160, 202) entre les rails du bus de courant continu (152, 154; 210, 212) et la borne (184; 224) du diviseur de tension, dans lequel la tension entre le + et le - du bus de courant continu et la tension du signal appliqué à l'enroulement au nombre d'au moins un sont supérieures à la tension de crête de la tension alternative appliquée; et

commander les commutateurs en réponse à une position détectée du rotor pour faire passer un courant dans l'enroulement de manière que l'enroulement génère un champ magnétique pour faire tourner le rotor à une vitesse et un couple souhaités.

2. Procédé selon la revendication 1, dans lequel il n'y a que deux commutateurs de puissance, le diviseur de tension comprend deux condensateurs (162, 164; 214, 216) connectés en série entre le + et le - du bus, l'enroulement étant connecté entre les condensateurs.

3. Procédé selon les revendications 1 ou 2, dans lequel la tension alternative est appliquée à un point de connexion (224) entre les deux condensateurs.

4. Procédé selon les revendications 1, 2 ou 3, dans lequel la commande fournit une série d'impulsions de démarrage aux commutateurs lorsque la vitesse de la machine est inférieure à une valeur et un ensemble d'impulsions de fonctionnement lorsque la vitesse est supérieure à la valeur.

5. Procédé selon la revendication 4, dans lequel la série d'impulsions de démarrage est fournie lorsqu'un courant passe dans l'enroulement pendant une première moitié de chaque angle de rotation successif de 180° du rotor lorsque la vitesse de la machine est inférieure à la valeur.

6. Procédé selon l'une quelconque des revendications précédentes, dans lequel la machine présente un premier mode de fonctionnement, dans lequel le courant passe dans l'enroulement pendant plus de la moitié de chaque angle de rotation successif de 180° du rotor, et dans lequel la machine présente un deuxième mode de fonctionnement après fonctionnement du premier mode, dans lequel un courant ne passe dans l'enroulement que pendant une première moitié de chaque angle de rotation successif de 180° du rotor.

7. Machine dynamoélectrique comportant un stator ayant au moins un enroulement (110, 170, 222), un rotor, un bus de courant continu (128; 152, 154; 210, 212) et des commutateurs de puissance (102, 104, 106, 108; 162, 164, 166, 168; 214, 216, 218, 220) connectés en série entre le + et le - du bus

   **caractérisée par** :

   deux commutateurs de puissance (166, 168; 218, 220)
   un diviseur de tension (162, 164; 214, 216) connecté entre les rails du bus (152, 154; 210, 212), le diviseur de tension ayant une borne (184; 224) fournissant une tension entre les tensions des rails du bus;
   une extrémité (186; 226) de l'enroulement (170; 222) étant connectée entre les deux commutateurs de puissance et l'autre extrémité (184; 224) connectée à la borne (184; 224) du diviseur de tension;
   un moyen (182, 232) pour détecter la position du rotor; et
   un circuit de commande (176, 232) réagissant au moyen pour détecter la position du rotor et commander opérationnellement les commutateurs pour faire passer un courant dans l'enroulement de manière que l'enroulement génère un champ magnétique pour faire tourner le rotor à une vitesse ou un couple souhaités.

8. Machine selon la revendication 7, ne comportant que deux commutateurs de puissance et comprenant un circuit redresseur (604) pour redresser une tension couplée à des bornes par une source de courant alternatif;

   un convertisseur (606) pour convertir la tension redressée en la tension de bus de courant continu; et
   un onduleur (608) destiné à onduler sélectivement la tension de bus de courant continu pour fournir une onde carrée de courant alternatif qui est appliquée à l'enroulement.

9. Machine selon la revendication 8, dans laquelle le convertisseur comprend un convertisseur continu/continu Cuk et une commande pour celui-ci réagissant à la tension du bus de courant continu et au courant continu et à la tension continue fournis par le circuit redresseur.

10. Machine selon la revendication 7, dans laquelle il n'y a que deux commutateurs de puissance, (166, 168; 218, 220), le diviseur de tension comprend deux condensateurs (162, 164; 214, 216) connectés en série entre le + et le - du bus, l'enroulement étant connecté entre les condensateurs.

11. Machine selon la revendication 10, dans laquelle un onduleur de bus (608) à prise centrale ayant des rails supérieur et inférieur qui sont connectés à et par les deux commutateurs de puissance (Q2, Q3) à l'une des extrémités de l'enroulement, et ayant une prise centrale connectée à l'autre extrémité de l'enroulement, l'onduleur de bus à prise centrale faisant partie du bus de courant continu, les deux condensateurs (C6, C5) étant connectés en série de sorte que la prise centrale est connectée entre les deux condensateurs; et

un moniteur de courant (614) connecté à la prise centrale, le circuit de commande réagissant au moniteur de courant pour réguler le courant fourni aux condensateurs.

**12.** Machine selon la revendication 11, dans laquelle l'onduleur de bus à prise centrale comprend les première et deuxième bornes et dans lequel la première bornée est connectée à la prise centrale et la deuxième borne est connectée aux rails supérieur et inférieur.

**13.** Machine selon les revendications 10 à 12, dans laquelle une tension alternative est appliquée à un point de connexion (224) entre les deux condensateurs.

**14.** Machine selon l'une quelconque des revendications 7 à 13, dans laquelle la première (210) borne et la deuxième borne (224) sont connectées à une source de courant alternatif (202), la première borne étant connectée au bus de courant continu via un circuit redresseur (206, 208) et la deuxième borne étant connectée au diviseur de tension de telle manière que la tension existant entre le + et le - du bus et appliquée à l'enroulement au nombre d'au moins un est supérieure à la tension de crête appliquée aux bornes par la source de courant alternatif.

**15.** Machine selon l'une quelconque des revendications 7 à 14, dans laquelle le stator a une configuration magnétiquement asymétrique par rapport au rotor, la configuration parquant le rotor dans une position de repos prédéterminée qui est une position de démarrage à couple positif.

**16.** Machine selon la revendication 15, dans laquelle le stator comprend une pluralité de dents (400), les dents ayant des faces définissant une ouverture pour recevoir le rotor, les faces des dents du stator et le rotor définissant entre elles un entrefer qui est asymétrique par rapport à une ligne médiane de chaque dent du stator.

**17.** Machine selon la revendication 16, dans laquelle chaque dent a une base et un bout amovible (420) grâce auquel l'enroulement peut être placé sur le stator entre les bases sans le bout en place sur la base et le bout peut-être ajouté à la base ultérieurement.

**18.** Machine selon la revendication 17, dans laquelle les bouts font partie d'une bague annulaire amovible placée entre le rotor et les bases des dents.

**19.** Machine selon l'une quelconque des revendications 7 à 18, dans laquelle le circuit de commande comprend une partie (316) de circuit servant à fournir une série d'impulsions de démarrage aux commutateurs lorsque la vitesse du moteur est inférieure à une valeur et un ensemble d'impulsions de fonctionnement lorsque la vitesse est supérieure à la valeur.

**20.** Machine selon la revendication 19, dans laquelle la série d'impulsions de démarrage est fournie lorsqu'un courant passe dans l'enroulement pendant une première moitié de chaque angle de rotation successif de 180° du rotor lorsque la vitesse de la machine est inférieure à la valeur.

**21.** Machine selon l'une quelconque des revendications 7 à 20, dans laquelle la machine présente un premier mode de fonctionnement dans lequel le courant passe dans l'enroulement pendant plus d'une moitié de chaque angle de rotation successif de 180° du rotor et dans lequel ladite machine présente un deuxième mode de fonctionnement après fonctionnement du premier mode, dans lequel le courant ne passe dans l'enroulement que pendant une première moitié de chaque angle de rotation successif de 180° du rotor.

**22.** Machine selon l'une quelconque des revendications 7 à 21, dans laquelle le circuit de commande comprend en lui une partie servant à faire avancer l'angle de commutation de commutateurs.

**23.** Machine selon l'une quelconque des revendications 7 à 22, comprenant une machine dynamoélectrique monophasée, à enroulement unique commutée électroniquement.

**24.** Machine selon l'une quelconque des revendications 7 à 23, dans laquelle le circuit de commande réagit à un signal d'entrée représentatif de la vitesse ou du couple souhaité de la machine.

**25.** Machine selon la revendication 24, dans laquelle les deux commutateurs sont commandés en alternance.

FIG. 1
PRIOR ART

FIG. 2A

FIG. 3A

POSITION SENSOR

182

CONTROLLER

176A

FIG.2B

21

FIG.3B

FIG.4

FIG. 5A

COGGING TORQUE

FIG. 5B

BACK EMF PROPORTIONAL (FLUX LINKAGE DIFFERENTIAL)

EP 0 613 234 B1

FIG. 6A

25

FIG.6B

FIG.6B

FIG. 6C

# FIG.7

EP 0 613 234 B1

FIG. 8

FIG.9

FIG. 10

EP 0 613 234 B1

31

# FIG. 11

SHAFT SPEED

FIG. 12A

PHASE CURRENT

FIG. 12B

SOURCE AND BUS VOLTAGES

FIG. 12C

SHAFT-APPLIED TORQUE

FIG. 12D

FIG. 13A

SHAFT SPEED

FIG. 13B

PHASE CURRENT

FIG. 13C

SOURCE AND BUS VOLTAGES

FIG. 13D

SHAFT APPLIED TORQUE

Phase Current

FIG.14A

Shaft-Applied Torque

FIG.14B

Source and Bus Voltages

FIG.14C

Line Current

FIG.14D

ELECTRICAL DEGREES

FIG.15A

Shaft Speed

FIG.15B

Phase Current

motor current polarity transition

FIG.15C

Source and Bus Voltages

upper band level

lower band level

lower band level

upper band level

FIG.15D

Shaft-Applied Torque

SECONDS

36

FIG.16A

FIG.16B

FIG.16C

FIG.16D

SECONDS

FIG.17

FIG. 18

FIG. 19

FIG. 20

400

400

400

400

400

400

422

422

422

422

422

420

420

420

420

420

420

422

422

422

424

400

FIG. 21A.

FIG. 21B